# EUROPEAN PATENT SPECIFICATION

(11) **EP 4 026 092 B1**
(45) Date of publication and mention of the grant of the patent: **05.02.2025**
(21) Application number: 19836297.2
(22) Date of filing: 11.12.2019
(51) Int. Cl.: G06T 7/73, G03B 15/00, H04N 23/60

(54) **SCENE LOCK MODE FOR CAPTURING CAMERA IMAGES**
SZENENVERRIEGELUNGSMODUS ZUR AUFNAHME VON KAMERABILDERN
MODE DE VERROUILLAGE DE SCÈNE POUR CAPTURER DES IMAGES DE CAMÉRA

(43) Date of publication of application: 13.07.2022
(73) Proprietor: Google LLC, Mountain View, CA 94043 (US)
(72) Inventor: SHI, Fuhao, Mountain View, California 94043 (US); LIANG, Chia-Kai, Mountain VIew, California 94043 (US); WANG, Youyou, Mountain View, California 94043 (US)
(74) Representative: Seymour-Pierce, Alexandra Isobel
(86) International application number: PCT/US2019/065765
(87) International publication number: WO 2021/118560

(56) References cited:
- JP-A- 2019 129 463
- US-A1- 2019 201 716
- US-A1- 2019 306 411

## Description

### BACKGROUND

Mobile computing devices, such as smartphones, typically have one or more camera devices. Because the quality and resolution of these camera devices have improved dramatically over time, users of mobile computing devices increasingly utilize and depend on these camera devices for capturing photographic images of their travels, activities, or other important events in their lives. In some cases, professional users may utilize such camera devices as part of, e.g., general surveillance or landscape monitoring within an environment. In addition, certain types of mobile computing devices (e.g., drones or satellites) may utilize one or more camera devices to automatically or programmatically obtain photographic images of certain areas or landscapes over time.

US 2019/306411 A1 discloses systems, methods, and devices for calculating an error between a current pose estimation of a camera and a first pose estimation of a camera. A method includes receiving a first image captured by a camera and a first parameter measured by an inertial measurement unit associated with the camera. The method includes calculating an initial pose estimation for the camera based on the first parameter and calculating a current pose estimation for the camera based on a real-time parameter measured by the inertial measurement unit associated with the camera. The method includes calculating an error between the current pose estimation for the camera and the initial pose estimation for the camera. The method includes determining whether the error is within an acceptable margin of error and, in response to determining the error is within the acceptable margin of error, providing an indication to capture a second image with the camera. JP2019129463 teaches techniques to allow a user using a mobile object with a mounted camera capable of autonomous flight to determine a shooting viewpoint that matches the pose of a reference image.

### SUMMARY

In general, this disclosure describes techniques for providing a scene capture or lock mode to capture camera images. A user may enable such a scene capture or lock mode, during execution of a camera application on a mobile computing device, to cause the application to capture or memorize a frame of one or more images of a certain scene that is output at a display device. For instance, after identifying or determining a desired pose of the camera device for photo-taking purposes, a first user can cause the camera application to enter this mode such that the application memorizes or otherwise captures the reference pose of the camera device for this scene. The mobile computing device can be later used by, e.g., another second user to take a photograph of the first user in this same scene, or, e.g., to monitor the condition of a building or natural environment over time. The mobile computing device may track the camera's rotation and/or translation in space, and may then generate a set of easy-to-follow guides (e.g., visual, audio, and/or haptic instructions) to enable the second user to move the camera from a current pose to the memorized, reference pose. Using these guides, the second user may manipulate the camera back to the memorized pose and capture a photograph of a desired scene that was previously saved and/or indicated by the first user. In some cases, the first user may use these guides to track changes of a desired scene over time, without involvement of a second user. In automated imaging applications, for example when monitoring environments over a long period of time, the instructions may be computer readable instructions.

The matter for protection is set out in the appended claims.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example mobile computing device that is configured to provide pose estimation and user guidance during image capture, in accordance with one or more aspects of the present disclosure.
FIG. 2 is a block diagram illustrating an example of the mobile computing device illustrated in FIG. 1, in accordance with one or more aspects of the present disclosure.
FIG. 3 is a block diagram illustrating an example of the pose estimator and pose guidance modules shown in FIG. 1 and/or FIG. 2, in accordance with one or more aspects of present disclosure.
FIGS. 4, 5A-5B, and 6A-6B are screen diagrams illustrating example outputs of reference images, current images, and/or pose guidance provided by a mobile computing device, such as the mobile computing device illustrated in FIG. 1 and/or FIG. 2, in accordance with one or more aspects of the present disclosure.
FIG. 7 is a flowchart illustrating example operations of a mobile computing device, such as the computing device illustrated in FIG. 1 and/or FIG. 2, in accordance with one or more aspects of the present disclosure.

### DETAILED DESCRIPTION

As noted above, mobile computing devices, such as smartphones, typically have one or more camera devices. Users of mobile computing devices may increasingly utilize and depend on these camera devices for capturing photographic images of their travels, activities, or other important events in their lives. Certain types of users may utilize camera devices as part of, e.g., general surveillance or landscape monitoring within an environment, and some mobile computing devices may be configured to automatically or programmatically obtain images of certain areas or landscapes over time.

A good scene composition process is typically important for users. In certain cases, a user, such as an owner of a mobile computing device that includes a camera device, may want another individual to take a photograph of a particular area or scene while the owner is included in the photograph. However, it may often be difficult to instruct the other individual as to how the owner wishes to have this individual orient the camera device while taking the photograph, or to otherwise describe the composition or desired scenery/background for the photograph. For example, a traveling user may wish to have a stranger take a photograph that includes the user standing in front of a particular landmark. However, the traveling user may find it difficult to explain to the stranger exactly how to position or orient the camera while taking the photograph, or exactly which portions of the landmark to include in the photograph.

In other examples, professional users may perform surveillance or landscape monitoring to assess the change of a given environment or scene, including any changes to natural or man-made features that may change over time (e.g., landscape change or deterioration, building or construction modifications or alterations over time). In yet other examples, certain types of mobile computing devices (e.g., drones or satellites) may utilize one or more camera devices to obtain images of certain areas or landscapes over time. In some cases, it can be desirable to capture areas of an environment when performing long-term monitoring using images, whether by automated or manual processes.

Examples described in this disclosure relate to techniques for providing a scene capture or lock mode for capturing camera images. In some cases, this may facilitate effective monitoring of building or environment conditions. In various examples, a user may enable such a scene capture or lock mode, during execution of a camera application on a mobile computing device, to cause the application to capture or memorize a frame of one or more images of a certain scene that is output at a display device. For instance, after identifying or determining a desired pose of the camera device for photo-taking purposes, the user can cause the camera application to enter this mode (e.g., via user input) such that the application memorizes or otherwise captures the reference pose of the camera device for this scene. The mobile computing device can be later used by the original user, or another user, to take a photograph using the same camera pose. The mobile computing device may include an inertial measurement unit (e.g., gyroscope) that, along with determined image features, may be used to track the camera's rotation and/or translation in space. The mobile computing device may then generate a set of easy-to-follow guides (e.g., visual, audio, and/or haptic instructions, or computer-readable instructions, associated with translation and/or orientation to move the camera device from a current pose to a memorized, reference pose). Using these guides or instructions, the original user, another user, or an automated system may manipulate the camera device back to the memorized pose and capture a photograph of a desired scene that was previously saved and, e.g., indicated by the original user. The entire process may be fast, intuitive, and accurate.

One or more of the disclosed techniques herein are related to current six degree of freedom camera motion tracking. Existing technologies may utilize inputs from sensors such as a gyroscope and an accelerometer, as well as image features extracted from captured frames, to estimate three-dimensional (3D) rotation and translation of a mobile computing device in space. However, these existing technologies track camera rotation and translation for every single captured frame, and are therefore very power- and time-consuming. Various techniques of the present disclosure, however, break down the pose tracking into separate steps, such as orientation-only tracking and combined orientation/translation tracking. Thus, in various cases, a more computationally efficient approach can be provided, which is of particular benefit for mobile computing devices, since battery life may be conserved by reducing the power required to perform the techniques.

For instance, after locking a particular scene captured by the camera device at a given moment in time, a gyroscope of the mobile computing device may subsequently determine orientation characteristics of the camera device on a per-frame basis, which is quite efficient and utilizes limited power. When the techniques determine that a current orientation of the device is substantially the same, or approximately within a threshold amount, of the previous orientation associated with the locked scene or pose (where the difference may be less than a predetermined threshold), the techniques then proceed with translation estimation. Utilizing these techniques in combination provides various benefits, such as power savings and processing efficiencies, because translation estimation only occurs once the techniques identify a sufficiently close match of a current device orientation to a previously saved orientation that corresponds to a locked or reference pose of the device. In certain examples, the mobile computing device may provide rotation- or orientation-only guidance to the user, in an effort to enable the user to orient the camera device substantially close to the desired pose. After this step, because typically a large portion of overlap occurs when a current camera orientation is similar to a reference orientation for the desired pose, lighter and more efficient estimation techniques for translation estimation can be used, which results in power saving (e.g., less power) and/or processing efficiencies (e.g., fewer computing resources) on the mobile computing device as compared to performing translation estimation for each frame, for example. In certain cases, the disclosed techniques may also relate to video and/or optical image stabilization techniques (e.g., fused stabilization).

In various examples, a high-frequency gyroscope and optical image stabilization (OIS) data, if available, are used to calculate the camera rotation and principal point offset (e.g., the point on the image plane onto which the perspective center is projected, or which can be set to the center of the image in some calculations). The mobile computing device uses the high-frequency gyroscope signals and captured frame data as input. If OIS data is also available and/or provided to the mobile computing device, the device may use such data to calculate the offset of the principal point. Furthermore, the frame data and corresponding image features may be used to estimate the two-dimensional and/or three-dimensional translation after first determining a substantial match of an orientation of the current device pose to a reference pose based on analysis of the high-frequency gyroscope signals.

As one example, when a user triggers a scene lock mode on the mobile computing device (e.g., by activating a button or providing another form of user input), the corresponding frame currently captured by the camera device is saved as a template or reference. Then, the mobile computing device may track the orientation of the camera device for each subsequently input frame. If the currently estimated orientation is similar to the memorized orientation, the mobile computing device may initiate translation estimation by matching the template with the current frame. Different image matching methods may be applied in different examples, as described herein, such as direct image correlation-based matching and image feature-based homography transform estimation. With the tracked result, the mobile computing device may generate instructions (e.g., using visual guides such as a bounding box or bounding corners of the locked scene projected onto the current frame, as described in further detail below) that indicate how a user is to orient and/or translate the device to a pose that corresponds to the reference pose associated with the saved template.

Throughout the disclosure, examples are described wherein a mobile computing device and/or computing system may analyze information associated with the computing device and information associated with the user of the computing device only if the computing device and/or the computing system receives explicit permission from the user of the computing device to analyze the information. For example, in situations discussed below in which the computing device and/or computing system may collect or may make use of information associated with the user and/or the computing device (e.g., image data), the user may be provided with an opportunity to provide input to control whether programs or features of the computing device and/or computing system can collect and make use of user information (e.g., image data associated with the user), or to dictate whether and/or how the computing device and/or computing system may receive content that may be relevant to the user. In addition, certain data may be treated in one or more ways before it is stored or used by the computing device and/or computing system, so that personally identifiable information is removed. For example, a user's identity may be treated so that no personally identifiable information can be determined about the user, or a user's geographic location may be generalized where location information is obtained (such as to a city, zip code, or state level), so that a particular location of a user cannot be determined. Thus, the user may have control over how information is collected about the user and used by the computing device and/or computing system.

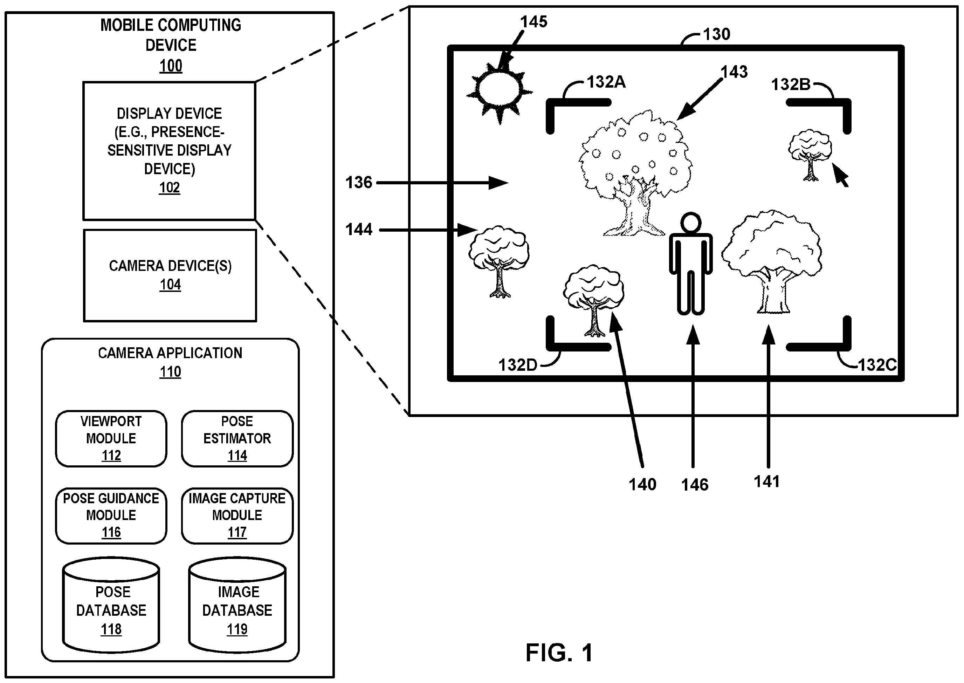

FIG. 1 is a conceptual diagram illustrating an example mobile computing device 100 that is configured to provide pose estimation and guidance during image capture, in accordance with one or more aspects of the present disclosure. Examples of mobile computing device 100 may include, but are not limited to, a mobile phone, a tablet computer, a personal digital assistant (PDA), a laptop computer, a portable gaming device, a portable media player, a wearable computing device (e.g., a watch, a wrist-mounted computing device, a head-mounted computing device), a television platform, a satellite or drone device, or other type of computing device. As will be described in further detail below, computing device 100 may be or include one or more processors.

As shown in FIG. 1, computing device 100 includes a display device 102 (e.g., a presence-sensitive display device). Display device 102 may have an input component and/or an output component. For instance, display device 102 may include a presence-sensitive input component, such as a resistive touchscreen, a surface acoustic wave touchscreen, a capacitive touchscreen, a projective capacitance touchscreen, a pressure-sensitive screen, an acoustic pulse recognition touchscreen, a presence-sensitive screen that detects motion via radar technology, or another presence-sensitive technology. Display device 102 may include a display component, such as a liquid crystal display (LCD), dot matrix display, light emitting diode (LED) display, cathode-ray tube (CRT) display, organic light-emitting diode (OLED) display, quantum dot LED (QLED) display, e-ink, projector, or similar monochrome or color display capable of outputting information to a user of mobile computing device 100.

As one example, display device 102 of computing device 100 may comprise a presence-sensitive display device, such as a touchscreen, that includes an input component and an output component. Display device 102 may receive indications of touch and/or presence-sensitive input by detecting one or more gestures from a user of mobile computing device 100 (e.g., the user touching or pointing to one or more locations of display device 102 with a finger or a stylus pen). Display device 102 may present output in a graphical user interface, which may be associated with functionality provided by mobile computing device 100. For example, display device 102 may present various graphical user interfaces of applications such as camera application 110 executing at mobile computing device 100. A user may interact with a respective graphical user interface of each of these applications to cause mobile computing device 100 to perform operations relating to corresponding application functionality.

In some examples, mobile computing device 100 may include one or more communication units, which may send data to and/or receive data from one or more other computing devices. In some examples, these communication units support wireless and/or wired communication and may send and/or receive data using any variety of communication protocols.

Mobile computing device 100 may include one or more camera devices 104, and may also be configured to execute a camera application 110. Camera application 110 may perform operations described herein using software, hardware, firmware, or a mixture of hardware, software, and firmware residing in and/or executing at computing device 100. Computing device 100 may execute applications such as camera application 110 using one or more processors. These applications may be implemented in various ways. For example, applications may be implemented as downloadable or pre-installed applications or "apps." Applications may also, in some examples, execute as a service of an operating system or computing platform. Display device 102 may present one or more graphical user interfaces (GUIs) to a user. These GUIs may include graphical elements (e.g., indications) displayed at various locations of display device 102.

As will be described in further detail below, camera application 110 may perform various operations using viewport module 112, pose estimator 114, pose guidance module 116, pose database 118, and image database 119 to enable scene capture for photograph composition. For example, viewport module 112 may manage and/or control data that is output for display at display device 102. Viewport module 112 may output, for display at display device 102, a frame (e.g., an image frame or a frame of a video, for example) having one or more images (e.g., images of real-world objects) that are captured by camera devices 104. Images may comprise representations of one or more real-world objects. Any given frame may include one or more images that are captured by camera devices 104, where each individual image may represent one or more real-world objects. For instance, an image may represent an entire group of objects captured by camera devices 104, or the image may represent one or more individual objects within the group.

In response to receiving an input (e.g., user input, as further described below) to select the frame, image capture module 117 may store the frame as a reference frame (e.g., in pose database 118 and/or image database 119), where the reference frame includes the one or more images of the displayed frame as reference images. Image capture module 117 may store the reference frame in any form of storage entity or device (e.g., volatile or temporary storage, non-volatile or permanent storage, etc.). Pose database 118 and image database 119 may be stored on mobile computing device 100, as shown in FIG. 1. In other examples, one or more of pose database 118 and/or image database 119 may be stored on one or more remote devices that are external to mobile computing device 100 (e.g., on an external server). In some cases, camera application 110 may be executed on one or more remote devices.

For example, as indicated in the example of FIG. 1, a first user, such as an owner of mobile computing device 100, may wish to take a photo of a particular scene or environment that includes multiple different trees on a sunny day in the park. This first user may capture and select a reference or locked frame of reference images based on the first user's desired scene within the park. The first user may, in some cases, provide a user input to trigger a scene lock mode on mobile computing device 100 (e.g., by activating a button or providing another form of user input) to select and/or store the currently displayed frame at display device 102 as the reference frame. For example, the first user may provide user input via touch, presence-sensitive, and/or audio input detected by one or more sensors of mobile computing device 100.

Pose estimator 114 may determine, based on the reference images included in the reference frame, a reference pose of camera devices 104. This reference pose is associated with the reference images. Camera application 110 may save or memorize the reference frame (e.g., template frame) of reference images, as well as any other information associated with the reference pose, within pose database 118. For example, pose estimator 114 may determine a reference orientation (e.g., rotation relative to x, y, z axes) and/or feature information associated with the captured reference images, and store this orientation and/or feature information as part of the reference pose within pose database 118. This reference pose may be associated with a desired orientation of mobile computing device 100 and/or camera devices 104 when displaying a particular group of the trees within the given scene on display device 102.

After determining the reference pose, viewport module 112 may output, for display at display device 102, a current frame 136 having one or more current images of the scene. These current images are also captured by camera devices 104. For example, after the first user (e.g., owner) of mobile computing device 100 has provided input to cause image capture module 117 to lock the template or reference frame associated with the reference pose, the first user may wish for another, second user to use mobile computing device 100 and camera devices 104 to take a photo of the first user within the scene, such that camera devices 104 have the same pose with respect to the scene (and trees within the scene) as the previously captured reference pose. While the other, second user manipulates mobile computing device 100, viewport module 112 may continuously display the current frame 136 of captured images at display device 102 for viewing by this user.

As noted above, camera devices 104 may include one or more camera devices. In examples where camera devices 104 include multiple camera devices, image capture module 117 may be configured to capture images from each of camera devices 104 and construct composite frames that include the images captured from each camera device. For example, image capture module 117 may capture a first frame of one or more images obtained from a first camera device of camera devices 104 at a given point in time. Image capture module 117 may also capture a second frame of one or more images obtained from a second camera device of camera devices 104 at the same point in time. For instance, a user of mobile computing device 100 may use camera application 110 to take a photograph, which causes camera devices 104 to capture images at the same point in time. Image capture module 117 may use one or more image processing functions to construct a composite frame of one or more images that are based on the individual images obtained by the first and second camera devices of camera devices 104. Camera devices 104 may include the same or different types of cameras (e.g., cameras having the same or different types of lenses or resolutions). In various examples, camera devices 104 may be included in fixed positions or configurations on mobile computing device 100 (e.g., in a fixed configuration on an upper, rear-side corner of mobile computing device 100). The positions or configurations of camera devices 104 may be associated with a particular pose (e.g., reference pose or current pose) of camera devices 104.

Pose estimator 114 may determine, based on the one or more current images included in the current frame 136, a current pose of camera devices 104 as viewport module 112 outputs these current images for display at display device 102. The current pose is associated with these current images. Pose estimator 114 may be configured to continuously determine whether or not the detected current pose is the same or different from the reference pose stored in pose database 118. Responsive to determining that the current pose is different from the reference pose, pose guidance module 116 may output an indication of one or more instructions (e.g., user instructions) to the second user to manipulate camera devices 104 of mobile computing device 100 from the current pose into the reference pose. As a result, the second user may receive and follow these user instructions to manipulate camera devices 104 to take a photograph of the first user within the scene, such that camera devices 104 have the same pose with respect to the scene, and trees within the scene, as the previously captured reference pose. The second user may then utilize camera devices 104 to cause image capture module 117 of camera application 110 to capture the current images of the current frame 136 displayed at display device 102, which may be saved in image database 119.

The user instructions provided by pose guidance module 116 may comprise visual, audio, and/or haptic output that provides one or more indications of the user instructions to manipulate camera devices 104 into the reference pose, and/or one or more computer-readable instructions for automated imaging processes. For example, as indicated above, the first user or owner of mobile computing device 100 may wish to take a photo of a particular scene or environment that includes multiple different trees on a sunny day in the park. This first user may capture a reference or locked frame of reference images, which correspond to the reference pose of camera devices 104, based on the first user's desire scene within the park. The reference pose may be associated with a reference orientation and/or translation of mobile computing device and/or camera devices 104 that corresponds to a display, at display device 102, of four particular trees in the park of the scene.

When the first user gives the mobile computing device to the second user, the first user may wish for the second user to manipulate camera devices 104 included in mobile computing device 100 (e.g., via rotational and/or translational manipulation), such that camera devices 104 have a current pose matching the desired locked pose, such that display device 102 includes the same four trees of the scene using the same camera pose as the locked, reference (or template) pose previously saved by the first user. Once the second user has manipulated camera devices 104 into the reference pose, the second user may use camera devices 104 to capture one or more current images displayed at display device 102 using image capture module 117. In some cases, the first user may wish to be included in the photo, in which case this first user may be part of the scene that is captured by camera devices 104 in the set of captured images. For example, as shown in FIG. 1, a current image 146 of the first user may be included within current frame 136 that is captured by image capture module 117. Image capture module 117 may store any captured images in image database 119. The first user may enable the second user to take a photograph of the first user within a particular portion of the scene, with a desired reference pose of camera devices 104, by first determining the desired reference pose within the pose database.

In the particular example of FIG. 1, pose guidance module 116 may provide visual guidance to the second user while attempting to manipulate camera devices 104 into the reference pose. It may be assumed that the first user (e.g., owner) of mobile computing device 100 has captured a reference pose of camera devices 104, which includes a reference frame that is output at display device 102 that includes reference images of four distinct trees within the scene. These reference images may comprise a reference image of a first tree, a reference image of a second tree, a reference image of a third tree, and a reference image of a fourth tree. The first user may provide user input to select the images as the reference images in the reference frame, which is the currently displayed frame at display device 102. For example, the first user may provide this user input via touch, presence-sensitive, and/or audio input detected by one or more sensors of mobile computing device 100 (e.g., sensors of display device 102 comprising a presence-sensitive display device, microphones of mobile computing device 100, force or pressure sensors of mobile computing device 100, radar-based sensors, and/or sensors associated with physical buttons coupled to mobile computing device 100).

After image capture module 117 captures and saves the reference frame that includes the reference images of these four trees, and while the second user subsequently attempts to manipulate camera devices 104 from a current pose into the desired reference pose, pose guidance module 116 may generate reference box corners 132A-132D (collectively, "reference box corners 132") that are output onto the currently displayed frame 136 at display device 102. In various examples, pose guidance module 116 may only output reference box corners 132 after pose estimator 1142 has first determined that a current orientation of camera devices 104, as part of the current pose, matches the reference orientation associated with the reference pose that is saved in pose database 118. In these examples, once this match of orientation has occurred, pose estimator 114 may proceed in determining whether the current pose matches the reference pose based on further translation estimation, and pose guidance module 116 may output reference box corners 132 relative to bounding box 130, as shown in FIG. 1. In certain other examples (not illustrated in FIG. 1), pose estimator 114 may determine a match between the current pose and the reference pose based solely on a match between the current orientation of camera devices 104 and a saved reference orientation of camera devices 104.

In FIG. 1, reference box corners 132 are associated with the reference frame and provide visual indications of the reference pose from pose database 118 that corresponds to the reference frame having the reference images of the four particular trees of the scene. However, current frame 136 includes current images of various trees in the scene, along with an image of the first user and an image of the sun. As shown in FIG. 1, current frame 136 includes a current image 140 of the first tree, a current image 141 of the second tree, a current image 142 of the third tree, and a current image 143 of a fourth tree. Current frame 136 also includes a current image 146 of the first user, a current image 144 of a separate (fifth) tree, and a current image 145 of the sun.

Pose guidance module 116 may also output a current bounding box 130, which is associated with current frame 136 and visually indicates the boundaries of current frame 136, and the various current images of frame 136, as output for display at display device 102, based on the current pose of camera devices 104. However, in the example of FIG. 1, current bounding box 130 is larger than the reference box or area indicated by reference box corners 132, indicating that the current pose is not matched with the reference pose. In particular, the reference frame corresponding to the reference pose may not include image 144 of the fifth tree at the left side of the scene, and may also not include image 145 of the sun. As a result, reference box corners 132 demarcate a reference area that is smaller than bounding box 130. This reference area does not enclose image 144 of the fifth tree or image 145 of the sun, and therefore reference box corners provide a visual indication to the second user that these images are not part of or otherwise included in the desired pose.

Instead, reference box corners 132 and bounding box 130 provide a visual indication that the second user is to manipulate camera devices 104 from the current pose into the reference pose by moving or translating camera devices 104 closer to the tree objects represented by current images 140, 141, 142, 143, and 146 until display device 102 only displays these images within the current frame, but does not display images 144 and 145. In some examples, bounding box 130 may be skewed (rather than rectangular), which may indicate an additional small rotation also to be made in addition to the translation to reach the reference pose. As the second user manipulates camera devices 104 in this fashion, pose guidance module 116 may continuously reorient the display of bounding box 130, onto the newly and currently displayed frame, in reference to the visual boundaries of reference box corners 132.

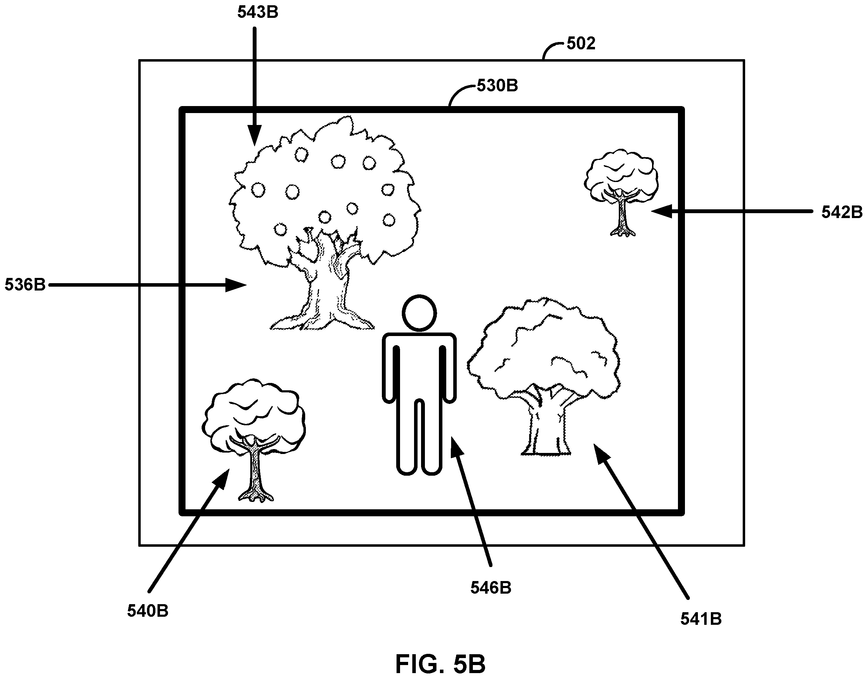

As the current pose more closely aligns with the reference pose, bounding box 130 will become more visually aligned with the reference area associated with and/or demarcated by reference box corners 132. Once bounding box 130 is substantially aligned with this reference area of reference box corners 132 (such as shown in the example of FIG. 5B), the current pose will be substantially aligned with the reference pose. Through such visual indication, the second user may know when camera devices 104 have been manipulated into the reference pose, and the second user may use camera devices 104 to take a photograph of updated images associated with current images 140, 141, 142, 143, and 146 shown in FIG. 1. The current images of the photograph may be captured by image capture module 117 and stored in image database 119. In the case where the first user (e.g., owner) wishes to be included in the photograph, the first user may situate himself or herself within a desired area of the scene (e.g., in between the four trees), and the second user may then take the photograph when pose guidance module 116 indicates that the current pose matches the desired reference pose. In this case, the photograph may include images of the trees within the scene, as well as an image of the first user.

As will be described in further detail below, rather than tracking both camera rotation and translation for every single captured frame, which may be very power- and time-consuming, various techniques of the present disclosure may break down the pose tracking into separate steps, such as orientation-only tracking and combined orientation/translation tracking. A more resource-efficient approach may therefore be provided. For instance, when locking a particular reference frame captured by camera devices 104 at a given moment in time, a gyroscope of mobile computing device 100 may first determine orientation characteristics on a per-frame basis, which is quite efficient and utilizes limited power. The reference pose may include or otherwise indicate this reference orientation. When mobile computing device 100 determines that a current orientation associated with a current pose of camera devices 104 is substantially the same, or approximately within a threshold amount, of the previous orientation for the locked scene or pose, mobile computing device 100 may only then proceed with translation estimation to determine whether the current pose matches the reference pose, according to certain examples. In some examples, pose estimator 114 may determine a match between the current pose and the reference pose based solely on a match between the current orientation of camera devices 104 and a saved reference orientation of camera devices 104.

In various examples, utilizing one or more of the disclosed techniques provides various benefits, such as power savings and processing efficiencies, because translation estimation may occur in various cases only after mobile computing device 100 identifies a sufficiently close match of a current device orientation in the current pose to a previously saved orientation associated with a reference pose of the device. The number of translation estimations may therefore potentially be reduced, which can reduce the use of computational resources and battery power. In certain examples, mobile computing device 100 may provide rotation- or orientation-only guidance to the user, in an effort to enable the user to orient mobile computing device 100 substantially close to the desired pose. After this step, since typically a large portion of overlap occurs when a current camera orientation is similar to a reference orientation for the desired pose, pose estimator 114 and/or pose guidance module 116 may utilize lighter estimation techniques for translation estimation (e.g., two-dimensional and/or three-dimensional estimation), which results in power saving and/or processing efficiencies on mobile computing device 100. During translation estimation, various image matching methods may be applied, such as direct image correlation-based matching and image feature-based homography transform estimation, as described in further detail below.

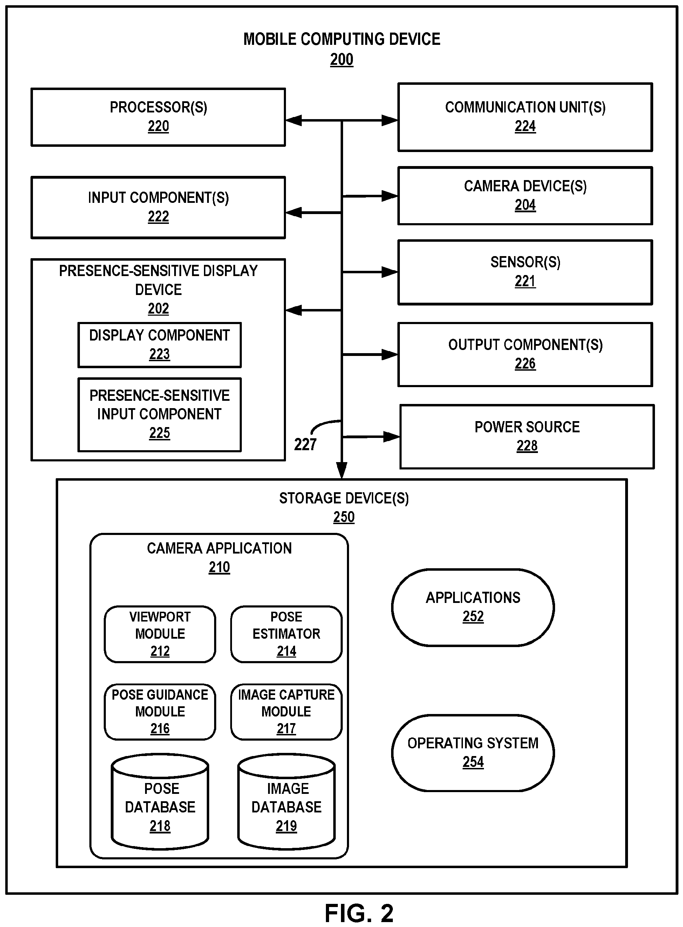

FIG. 2 is a block diagram illustrating an example mobile computing device 200, in accordance with one or more aspects of the present disclosure. Mobile computing device 200 may comprise one example of mobile computing device 100 illustrated in FIG. 1. FIG. 2 illustrates only one particular example of mobile computing device 200, and many other examples of mobile computing device 200 may be used in other instances and may include a subset of the components included in example mobile computing device 200 or may include additional components not shown in FIG. 2.

In the example of FIG. 2, mobile computing device 200 includes presence-sensitive display device 202, one or more processors 220, one or more input components 222, one or more communication units 224, one or more output components 226, one or more camera devices 204, one or more sensors 221, a power source 228, and one or more storage devices 250. Storage devices 250 of mobile computing device 200 are configured to store camera application 210. Communication channels 227 may interconnect each of the components 220, 222, 202, 204, 221, 250, 228, 226, and/or 224 for inter-component communications (physically, communicatively, and/or operatively). In some examples, communication channels 227 may include a system bus, a network connection, an inter-process communication data structure, or any other method for communicating data between hardware and/or software.

One or more input components 222 of computing device 200 may receive input, such as input from a user. Examples of input are touch/tactile, presence-sensitive, and audio input. Examples of input components 222 include a presence-sensitive screen, touch-sensitive screen, touchscreen, mouse, keyboard, trackpad, voice responsive system, video camera, microphone or any other type of device for detecting input from a human or machine.

One or more output components 226 of computing device 200 may generate output. Examples of output are haptic, audio, and visual output. Examples of output components 226 include a presence-sensitive screen, touch-sensitive screen, touchscreen, sound card, video graphics adapter card, speaker, cathode ray tube (CRT) display, liquid crystal display (LCD), haptic device, or any other type of device for generating output to a human or machine.

One or more communication units 224 of computing device 200 may communicate with external devices via one or more networks by transmitting and/or receiving network signals on the one or more networks (e.g., one or more wired and/or wireless networks). For example, mobile computing device 200 may use communication units 224 to transmit and/or receive radio signals on a radio network such as a cellular radio network. Likewise, communication units 224 may transmit and/or receive satellite signals on a satellite network such as a global positioning system (GPS) network. Examples of communication units 44 include a network interface card (e.g. such as an Ethernet card), an optical transceiver, a radio frequency transceiver, a GPS receiver, or any other type of device that can send and/or receive information. Other examples of communication units 224 may include short wave radios, cellular data radios, wireless Ethernet network radios, as well as universal serial bus (USB) controllers.

Presence-sensitive display device 202 of computing device 200 includes display component 223 and presence-sensitive input component 225. In some examples, presence-sensitive display device 202 may provide output to a user using haptic, audio, or visual stimuli as described above with reference to output components 226. For example, display component 223 may provide display or video output as described with reference to output components 226. Presence-sensitive display device 202 may also provide input capabilities such as that described above with reference to input components 222. For example, presence-sensitive input component 225 may provide input capabilities as described with reference to input components 222.

Display component 223 may be a screen at which information is displayed by presence-sensitive display device 202, and presence-sensitive input component 225 may detect an object at and/or near display component 223. As one example range, presence-sensitive input component 225 may detect an object, such as a finger or stylus that is within two inches or less of display component 223. Presence-sensitive input component 225 may determine a location (e.g., an (x,y) coordinate) of display component 223 at which the object was detected. In another example range, presence-sensitive input component 225 may detect an object six inches or less from display component 223 and other ranges are also possible. Presence-sensitive input component 225 may determine the location of display component 223 selected by a user's finger using capacitive, inductive, radar-based, and/or optical recognition techniques. In some examples, presence sensitive input component 225 also provides output to a user using touch, presence-sensitive, audio, or video stimuli as described with respect to display component 223. Display component 223 may be any type of output device that provides visual output, such as described with respect to output components 226.

While illustrated as an internal component of mobile computing device 200, presence-sensitive display device 202 may also represent an external component that shares a data path with mobile computing device 200 for transmitting and/or receiving input and output. For instance, in one example, presence-sensitive display device 202 represents a built-in component of mobile computing device 200 located within and physically connected to the external packaging of mobile computing device 200 (e.g., a screen on a mobile phone). In another example, presence-sensitive display device 202 represents an external component of mobile computing device 200 located outside and physically separated from the packaging of mobile computing device 200 (e.g., a monitor and/or a projector that shares a wired and/or wireless data path with a tablet computer).

Presence-sensitive display device 202 of mobile computing device 200 may detect two-dimensional and/or three-dimensional gestures as input from a user of mobile computing device 200. For instance, a sensor of presence-sensitive display device 202 (e.g., sensor of presence-sensitive input component 225) may detect a user's movement (e.g., moving a hand, an arm, a pen, a stylus) within a threshold distance of the sensor of presence-sensitive display device 202. Presence-sensitive display device 202 may determine a two- or three-dimensional vector representation of the movement and correlate the vector representation to a gesture input (e.g., a hand-wave, a pinch, a clap, a pen stroke) that has multiple dimensions. In other words, presence-sensitive display device 202 can detect a multi-dimensional gesture without requiring the user to gesture at or near a screen or surface (e.g., display component 223) at which presence-sensitive display device 202 outputs information for display. Instead, presence-sensitive display device 202 can detect a multi-dimensional gesture performed at or near a sensor which may or may not be located near the screen or surface at which presence-sensitive display device 202 outputs information for display.

One or more storage devices 250 within computing device 200 may store information for processing during operation of computing device 200 (e.g., during execution of one or more applications 252, operating system 254, or camera application 210). In some examples, storage devices 250 include temporary memory, meaning that a primary purpose of storage devices 250 is not long-term storage. Storage devices 250 on mobile computing device 200 may be configured for short-term storage of information as volatile memory and therefore not retain stored contents if powered off. Examples of volatile memories include random access memories (RAM), dynamic random-access memories (DRAM), static random-access memories (SRAM), and other forms of volatile memories known in the art.

Storage devices 250, in some examples, include one or more computer-readable storage media. Storage devices 250 may be configured to store larger amounts of information than volatile memory. Storage devices 250 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage devices 250 may store program instructions and/or data associated with one or more applications 252, operating system 254, and camera application 210.

In certain examples, storage devices 250, or one or more of components included in storage devices 250, may be stored on one or more remote computing devices that are external to mobile computing device 200 (e.g., on one or more external servers). In some examples, one or more remote computing devices may store and/or execute camera application 210, applications 252, and/or operating system 254. In these examples, the one or more remote computing devices may perform functionality similar to that described herein in reference to processors 220.

As shown in FIG. 2, mobile computing device 200 may include a power source 228. In some examples, power source 228 may be a battery. Power source 228 may provide power to one or more components of computing device 2. Non-limiting examples of power source 228 may include, but are not necessarily limited to, batteries having zinc-carbon, lead-acid, nickel cadmium (NiCd), nickel metal hydride (NiMH), lithium ion (Li-ion), and/or lithium ion polymer (Li-ion polymer) chemistries. In some examples, power source 228 may have a limited capacity (e.g., 1000-3000 mAh).

Mobile computing device 200 also includes one or more sensors 221. In some examples, one or more of sensors 221 may be examples of one or more of input components 222. Sensors 221 may include one or more inertial measurement units. For example, sensors 221 may include one or more gyroscopes, such as one or more high-frequency gyroscopes (e.g., a 200 Hz gyroscope). As described herein, sensors 221 of mobile computing device 200 may be configured to determine a real-time orientation or rotation of mobile computing device 200 in three-dimensional space. In some examples, sensors 221 may also include one or more accelerometers.

Mobile computing device 200 further includes one or more camera devices 204. Camera devices 204 may be one example of camera devices 104 shown in FIG. 1. Camera devices 204 are configured to capture one or more images during execution of camera application 210 (e.g., image capture module 217 of camera application 210), such as one or more still and/or moving images. Camera devices 204 may include one or more camera devices on a front-side and/or on a rear-side of mobile computing device 200.

Camera devices 204 may be one or more of any appropriate type of image acquisition or capture device, such as a camera or charge-coupled device. In some examples, camera devices 204 may include one or more infrared cameras with a high field-of-view and shallow depth of focus, and may include a backlit infrared camera having a particular field-of-view. In other examples, camera devices 204 may be or may further include one or more other types of cameras or image sensors, which may include one or more other infrared cameras, thermographic cameras, thermal imaging cameras, light-sensitive cameras, range sensors, tomography devices, radar devices, red-green-blue (RGB) cameras, or ultrasonic cameras. In some examples, camera devices 204 may include any image capture device appropriate for application of computer vision techniques. Depending on the type of camera devices used, the resulting images may include two-dimensional images, three-dimensional volumes, and/or an image sequence. Pixel values typically correspond to light intensity in one or more spectral bands, but might also be related to various physical measures, such as depth, absorption or reflectance of sonic or electromagnetic waves, or nuclear magnetic resonance.

One or more processors 220 may implement functionality and/or execute instructions within mobile computing device 200. For example, processors 220 on mobile computing device 200 may receive and execute instructions stored by storage devices 250 that execute the functionality of applications 252, operating system 254, and/or camera application 210. These instructions executed by processors 220 may cause mobile computing device 200 to store information within storage devices 250 during program execution. Processors 220 may execute instructions of operating system 254 and applications 252 to perform one or more operations. That is, operating system 254 and applications 252 may be operable by processors 220 to perform various functions described herein.

In some alternate examples, mobile computing device 200 may only comprise or otherwise include processors 220. In these examples, input components 222, presence-sensitive display device 202, communication units 224, output components 226, power source 228, and storage devices 250 may be external to, yet communicatively coupled with (e.g., via communication channels 227), mobile computing device 200.

Applications 252 may include one or more different various applications. An e-mail application, a map or navigation application, calendar application, a messaging application, a social media application, a travel application, a game application, a stock application, and a weather application are all examples of applications 252.

Camera application 210, which is stored on storage devices 250, may be executed by processors 220 and is one example of camera application 110 in FIG. 1. Similar to camera application 110, camera application 210 includes viewport module 212 (e.g., one example of viewport module 112), pose estimator 214 (e.g., one example of pose estimator 114), pose guidance module 216 (e.g., one example of pose guidance module 116), image capture module 217 (e.g., one example of image capture module 117), pose database 218 (e.g., one example of pose database 118), and image database 219 (e.g., one example of image database 119).

Viewport module 112 may manage and/or control data that is output for display at presence-sensitive display device 202. Viewport module 212 may output, for display at display device 202, a frame having one or more images that are captured by camera devices 204. In response to receiving an input (e.g., user input, as further described below) to select the frame, image capture module 217 may store the frame as a reference frame (e.g., in pose database 218 and/or image database 219). For example, as indicated in the example of FIG. 1, a first user, such as an owner of mobile computing device 200, may wish to take a photo of a particular scene or environment that includes multiple different objects (e.g., trees in the park). In some cases, this first user may wish to be included in the photo, and therefore may need assistance from a second user in taking the photo. However, the first user may have a preference for a particular pose when taking the photo, and may find it challenging to explain to the second user exactly how to orient and/or position camera devices 204 of mobile computing device 100 when taking the photo of the objects and the first user. Without providing sufficient guidance to the second user, the second user may accidentally take a photo of different group of objects or different portion within a desired scene.

Thus, using techniques of the present disclosure, before giving mobile computing device 200 to the second user, the first user may initially use mobile computing device 200 to capture and select a displayed frame as a reference or locked frame of reference images based on the first user's desire scene. For instance, the first user may orient and/or position mobile computing device 200, including camera devices 204, to view a group of images within a scene that are output by viewport module 212 at presence-sensitive display device 202. Viewport module 212 may output, to presence-sensitive display device 202, real-time frames of images as the first user moves mobile computing device 200 and camera devices 204 within three-dimensional space.

When viewport module 212 outputs a frame of images having desired orientations and/or positions as displayed at presence-sensitive display device 202, the first user may trigger a scene lock mode on mobile computing device 200 (e.g., by activating a button or providing another form of user input) to select the displayed frame as a reference frame, causing viewport module 212 and/or image capture module 217 to select and/or store the currently displayed frame of outputted images as a reference or template frame. For example, the first user may provide this user input via touch, presence-sensitive, and/or audio input detected by one or more sensors of mobile computing device 200 (e.g., sensors included in presence-sensitive display device 202 and/or sensors 221 and/or input components 222, such as touch sensors, radar-based sensors, microphones, force or pressure sensors, sensors associated with physical buttons coupled to mobile computing device 200, other presence-sensitive sensors, and the like).

In some examples, as described in further detail below, camera application 210 may only allow the first user to provide such user input to select or trigger such a scene lock mode when appropriate or under certain conditions. For instance, to avoid potential failure cases when frames are hard to track (e.g. frames having white area without enough salient features), viewport module 212 and/or pose estimator 214 may be configured to evaluate how reliable current frames of images captured by camera devices 204 may be tracked, and only enable user selection of a scene lock mode to capture a reference frame when the determined reliability or confidence score satisfies a determined threshold. In some cases, this evaluation may be performed efficiently by fast image analysis, such as corner detection.

After the first user has captured the reference frame of images, pose estimator 214 may determine, based on the reference images included in the reference frame, a reference pose of camera devices 204. This reference pose is associated with the reference images. Camera application 210 may save or memorize the reference frame of reference images (e.g., as a template frame), as well as any other information associated with the reference pose, within pose database 218. For example, pose estimator 214 may determine a reference orientation and/or feature information associated with the captured reference images, and store this orientation and/or feature information as part of the reference pose within pose database 218.

After determining the reference pose of camera devices 204, the first user may then give mobile computing device 200 to the second user. The second user may then begin using camera devices 204 and camera application 210 in an effort to capture a frame of images that corresponds to the desired reference frame previously captured and stored by the first user. In this case, while the second user is using camera devices 204 and camera application 210, viewport module 212 may output, for display at presence-sensitive display device 202, a current frame having one or more current images of the scene. While the second user manipulates mobile computing device 200, viewport module 212 may continuously display the current frame of captured images at presence-sensitive display device 202 for viewing by this user.

Pose estimator 214 may determine, based on the one or more current images included in the current frame, a current pose of camera devices 204 as viewport module 212 outputs these current images for display at presence-sensitive display device 202. The current pose is associated with these current images. Pose estimator 214 may be configured to continuously determine whether or not the detected current pose is the same or different from the reference pose stored in pose database 218. In various examples, when determining the pose (e.g., reference and/or current pose) of camera devices 204, pose estimator 214 may determine pose information associated with the respective pose. This pose information may include frame and image information. For instance, the reference pose of camera devices 204 may include reference pose information including features of the reference frame and/or the reference images included in the reference frame. The current pose of camera devices 204 may include current pose information including features of the current frame and/or the current images included in the current frame. Pose estimator 214 may store pose information within pose database 218.

In some cases, the pose information may further include orientation and/or translation information for the respective pose. For example, reference pose information may include reference orientation information for the reference pose of camera devices 204, and the current pose information may include current orientation information for the current pose of camera devices 204, as described in further detail below. In these cases, sensors 221 of mobile computing device 200 may include one or more gyroscopes that are configured to determine the real-time orientation or rotation of mobile computing device 200 in three-dimensional space. Pose estimator 214 may utilize the signals from sensors 221 to monitor and determine the orientation of mobile computing device 200 and camera devices 204 on a frame-by-frame basis for frames of images that are output by viewport module 212 at presence-sensitive display device 202. As noted above, pose estimator 214 may store pose information within pose database 218. In some cases, pose estimator 214 may also store orientation and/or translation information in metadata for captured images, which may be stored in pose database 218 and/or image database 219.

Pose estimator 214 may determine whether a current pose of camera devices 204 substantially matches a saved reference pose in pose database 218. Pose tracking may include orientation-only tracking and/or combined orientation/translation tracking. For example, in some cases, pose estimator 214 may determine a match of the current pose with the reference pose based on a match of the current orientation of camera devices 204 with a reference orientation of camera devices 204. In other cases, pose estimator 214 may determine a match of the current pose with the reference pose based first on a match of the current orientation of camera devices 204 with a reference orientation of camera devices 204, and then subsequently and further based on translation estimation that compares images or image features of the current frame with those of the reference frame. In these cases, pose estimator 214 may not determine a match of poses until it determines a match of device orientation as well as a match of images or image features between the current frame of the current pose and the reference frame of the reference pose.

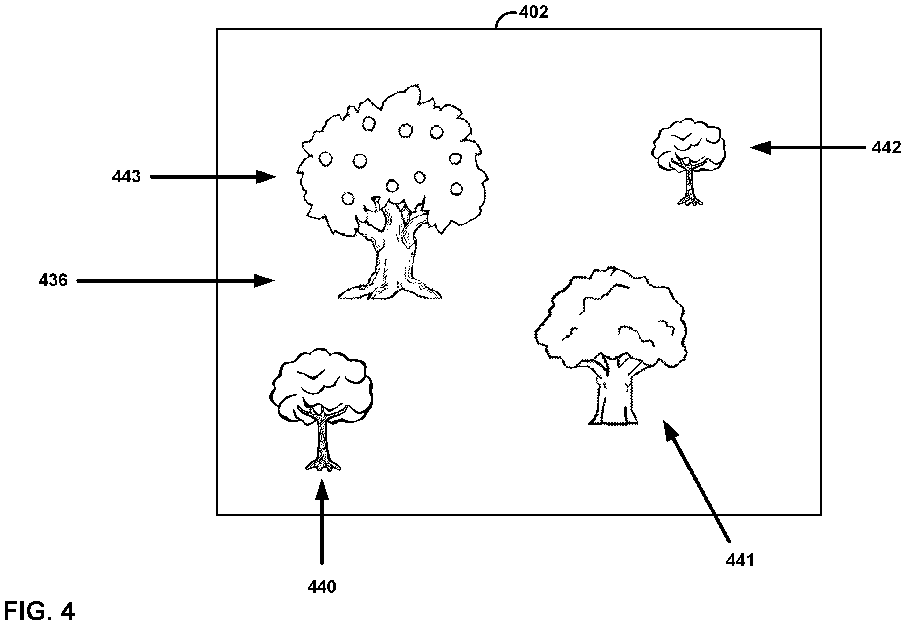

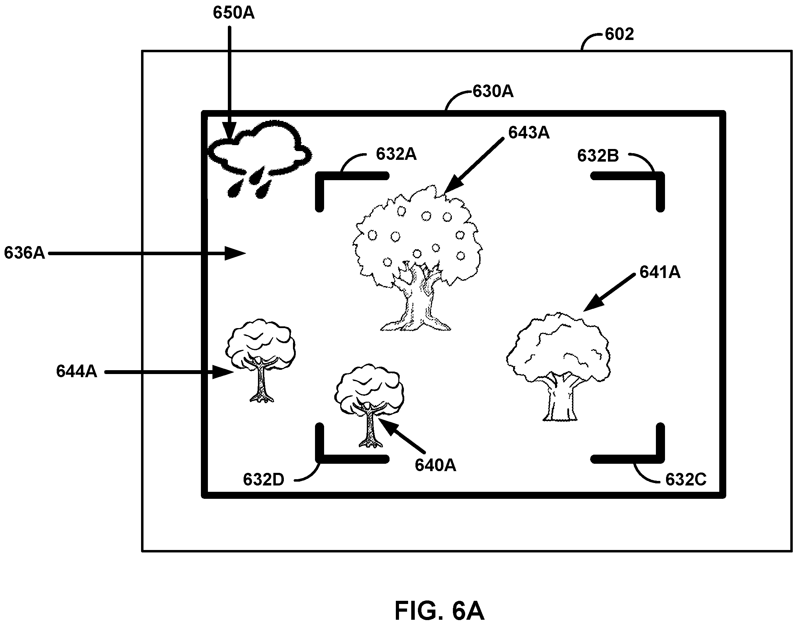

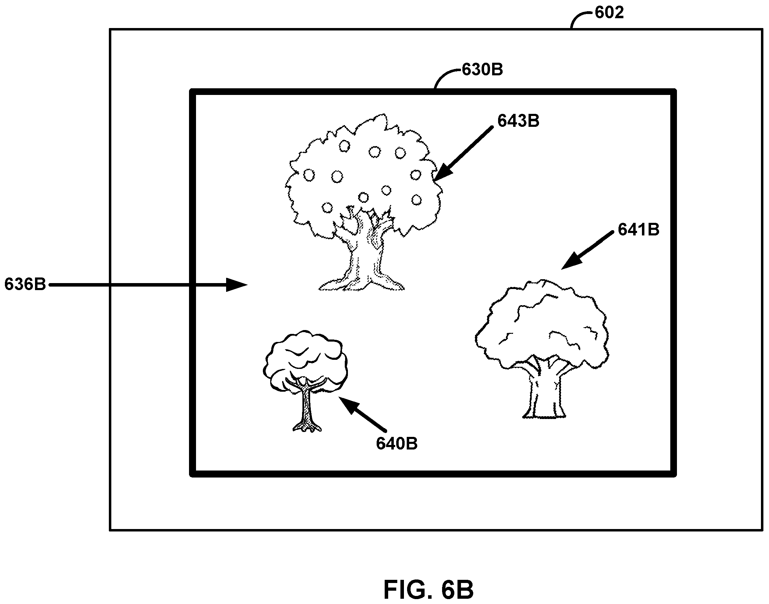

Responsive to determining that the current pose is different from the reference pose based on a determined pose difference, pose guidance module 216 may output an indication of one or more (user) instructions to manipulate camera devices 204 from the current pose into the reference pose. As shown in FIG. 2 and as will be further described below in reference to FIGS. 4-6, pose guidance module 216 may provide visual indications of these instructions at presence-sensitive display device 202, such as through the use of reference box corners and/or overlaid bounding boxes. In some cases, pose guidance module 216 may provide user guidance that includes instructions (e.g., visual, audio, and/or haptic instructions) to rotate, translate, and/or otherwise move camera devices 204 of mobile computing device 200 in three-dimensional space based on the determined difference between the current pose and the reference pose. In addition, pose guidance module 216 may output an indication of a match when the current pose matches the reference pose (e.g., by visually indicating a match between reference box corners and a current bounding box, such as such in FIG. 6).

As a result, the second user may receive and follow these user instructions to manipulate and use camera devices 204 to take a photo of the first user within the desired scene, such that camera devices 204 have the same pose with respect to the scene as the previous reference pose that was captured by the first user. The second user may then utilize camera devices 204 to cause image capture module 217 of camera application 210 to capture the current images of the current frame displayed at presence-sensitive display device 202, which may be saved in image database 219. The user instructions provided by pose guidance module 216 may comprise visual, audio, and/or haptic output that provide one or more indications of the user instructions to manipulate camera devices 204 into the reference pose. In various cases, more effective environmental and structural condition monitoring by one or more users may also be facilitated using these techniques.

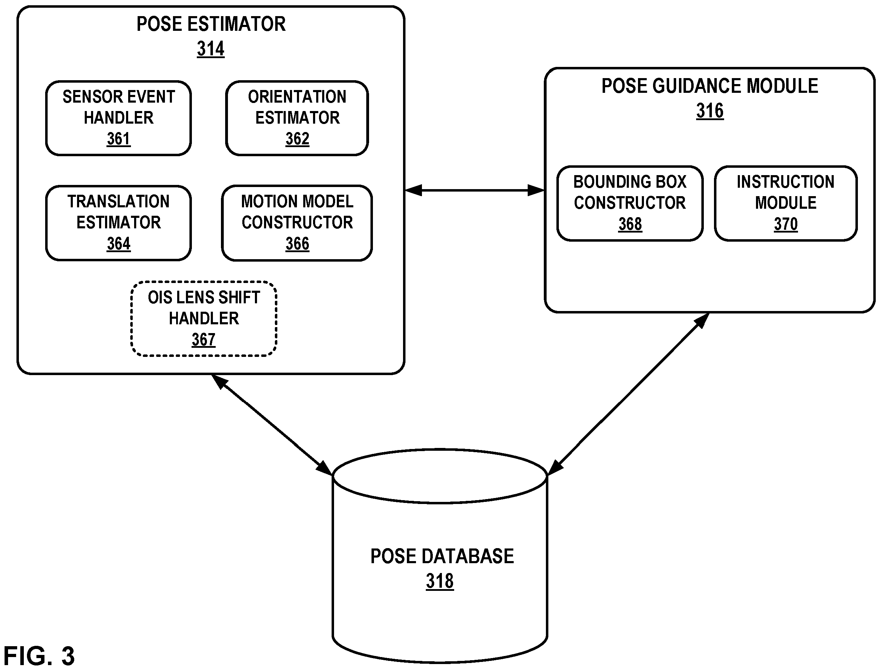

FIG. 3 is a block diagram illustrating an example of the pose estimator and pose guidance modules shown in FIG. 1 and/or FIG. 2, in accordance with one or more aspects of the present disclosure. Pose estimator 314 is one example of pose estimate 114 (FIG. 1) and/or pose estimator 214 (FIG. 2). Pose guidance module 316 is one example of pose guidance module 116 (FIG. 1) and/or pose guidance module 216 (FIG. 2). Pose database 318 is one example of pose database 118 (FIG. 1) and/or pose database 218 (FIG. 2). For purposes of illustration only, various aspects of FIG. 3 are described in reference to mobile computing device 200 shown in FIG. 2.

As outlined previously, existing technologies may utilize inputs from sensors such as a gyroscope and an accelerometer, as well as image features extracted from captured frames, to estimate three-dimensional (3D) rotation and translation of a mobile computing device in space. However, these existing technologies track camera rotation and translation for every single captured frame, and are therefore very power- and time-consuming. Various techniques of the present disclosure, however, break down the pose tracking into orientation-only tracking and translation tracking.

For instance, when locking a particular scene captured by camera devices 204 (FIG. 2) at a given moment in time, a gyroscope (e.g., one of sensors 221) of mobile computing device 200 may first just determine orientation characteristics on a per-frame basis, which is quite efficient and utilizes limited power as compared to also monitoring translation characteristics. Sensor event handler 361 may be configured to process the signals from the gyroscope and estimate the latest camera orientation (e.g., R(t), rotation matrix indicating the angle of the camera from the x, y, z axes at the current time, t), such as at high frequency (e.g., 200 Hz).

When orientation estimator 362 of pose estimator 314 determines that a current orientation of camera devices 204 is substantially the same, or approximately within a threshold amount, of the previous orientation for the locked scene or pose, translation estimator 364 then proceeds with translation estimation. Utilizing these techniques provides various benefits, such as power savings and processing efficiencies, because translation estimation by translation estimator 364 only occurs once orientation estimator 362 identifies a sufficiently close match of a current device orientation to a previously saved orientation that corresponds to a locked or reference pose of camera devices 204.

In certain examples, pose guidance module 316 provides rotation- or orientation-only guidance to the user, in an effort to enable the user to orient camera devices 204 substantially close to the desired pose. After this step, given that typically a large portion of overlap occurs when a current camera orientation is similar to a reference orientation for the desired pose, lighter estimation techniques for translation estimation (e.g., two-dimensional and/or three-dimensional estimation) can be used by translation estimator 364, which results in power saving and/or processing efficiencies on mobile device computing device 200.

In various examples, a high-frequency gyroscope and optical image stabilization (OIS) data, if available, are used by an optional OIS lens shift handler 367 to calculate the camera rotation and principal point offset. Mobile computing device 200 uses the high-frequency gyroscope signal and captured frame data as input. If OIS data is also available and/or provided to mobile computing device 200, OIS lens shift handler 367 may use such data to calculate the offset of the principal point. OIS lens shift handler 367 may, in some cases, continuously fetch OIS readout data, if available (e.g., via sensors 221), and convert the OIS readout into a two-dimensional pixel offset (e.g., O_len(t) = (O_len(x, t), O_len(y, t))).

Furthermore, as noted above, the frame data and corresponding image features may be used by translation estimator 364 to estimate the two-dimensional and/or three-dimensional translation after orientation estimator 362 first determines a substantial match of an orientation of the current pose to a reference pose based on the high-frequency gyroscope signal. Translation estimator 364 may initiate translation estimation by matching the template with the current frame. Different image matching methods may be applied in different examples, as described herein, such as direct image correlation-based matching and image feature-based homography transform estimation. In some examples, translation estimator 364 may estimate two-dimensional translation by comparing (e.g., features of) current images of a current frame to (e.g., features of) reference images of a reference frame, and estimating the two-dimensional translation of the current images relative to the reference images based on the comparison (or translation of the current pose relative to the reference pose, e.g.. the adjustment in the translation component to transform the current pose to the reference pose).

Motion model constructor 366 may use information from sensor event handler 361, orientation estimator 362, translation estimator 364, and/or OIS lens shift handler 367 to map (e.g., with a projection matrix, as described in further detail below) a real-world scene of current frame data to the images of a reference frame. With the mapped result, pose guidance module 316 may generate instructions (e.g., using bounding box constructor 368 to create visual guides such as a bounding box or bounding corners of the locked scene projected onto the current frame, using instruction module 370 to provide any form of visual/haptic/audio instructions) indicating how to orient and/or translate camera devices 204 to a pose that corresponds to the reference pose of the saved template.

As noted above, motion model constructor 366 may use information from sensor event handler 361, orientation estimator 362, translation estimator 364, and/or OIS lens shift handler 367 to map a real-world scene of current frame data to the images of a reference frame. In some cases, motion model constructor 366 may also use metadata from any input frame. For example, given any input frame, motion model constructor 366 may use the associated metadata for the frame (e.g., exposure time, rolling shutter time, focal length, etc.), camera rotation information from orientation estimator 362, as well as OIS lens offset data from optional OIS lens shift handler 367 (when available), to construct the projection matrix that maps the real world scene of the current frame to the reference images of the reference frame.

Specifically, in various non-limiting examples, for any given input frame having a frame index of 'i', the determined projection matrix P(i) may be expressed as P(i) = K(i)*M(i), where i is the frame index, K(i) is the camera intrinsic matrix, and M(i) is a 4x4 camera extrinsic matrix. In these examples, M(i)=[R(i) T(i); 0 0 0 1], where R(i) is a 3x3 camera rotation matrix obtained from sensor event handler 361 associated with real-time orientation estimation for the camera, and T(i) is a 3x1 camera translation vector obtained by translation estimator 364 associated with real-time translation estimation for the camera. K(i)=[f 0 Pt(x) + O_len(x) 0; f 0 Pt(y) + O_len(y) 0; 0 0 1 0], which is the camera intrinsic matrix, where f is the focal length of the current frame, Pt is the two-dimensional principal point which is set to the image center, and O_len is the converted OIS readout in pixels if provided by OIS lens shift handler 367.

As indicated above, sensor event handler 361 may provide R(i), the 3x3 camera rotation matrix for a given frame, as input to motion model constructor 366. Translation estimator 364 may provide T(i), the 3x1 camera translation vector for the given frame, as input to motion model constructor 366. In various examples, translation estimator 364 may process, as input, the current frame and the template/reference frame from the memorized view (which may be stored in pose database 318), exact features on them, and find a match and/or correspondences between these frames with potential outliers removed in performing two-dimensional translation estimation. Translation estimator 364 may also then perform three-dimensional translation estimation, based on the two-dimensional estimate, to generate the T(i) translation vector.

There are multiple different ways to achieve such estimation. In some cases, pose estimator 314 may use orientation estimator 362 and translation estimator 364 to track per-frame camera pose, using both rotation and translation estimation in combination. With a locked camera position, pose estimator 314 may determine relative rotation and translation to the current camera position as R(curr)*R(lock)^-1 and T(curr)-T(lock). R(curr) is a 3x3 camera rotation matrix for the current frame, R(lock) is a 3x3 camera rotation matrix for the locked/reference frame, T(curr) is a 3x1 camera translation vector for the current frame, and T(lock) is a 3x1 camera translation vector for the locked/reference frame. However, this implementation may result in certain power and/or processing efficiencies, as noted earlier.

Thus, according to various techniques of the present disclosure, when orientation estimator 362 of pose estimator 314 determines that a current orientation of camera devices 204 is substantially the same, or approximately within a threshold amount, of the previous orientation for the locked scene or pose, translation estimator 364 then proceeds with translation estimation. Utilizing these techniques provides various benefits, such as power savings and processing efficiencies, because translation estimation by translation estimator 364 only occurs once orientation estimator 362 identifies a sufficiently close match of a current device orientation to a previously saved orientation, stored in pose database 318, which corresponds to a locked or reference pose of camera devices 204.

According to these techniques, pose estimator 314 may, in one or more examples, trigger translation estimation by translation estimator 364 only after a camera orientation of a current pose associated with a current frame of images is sufficiently close to, or within a determined threshold of, a saved camera orientation of a reference pose associated with a reference frame of images. Pose estimator 314 may determine, in real-time, a compared difference between a current rotation or orientation of camera devices 204 and the reference rotation or orientation, where the compared difference may comprise a rotation value. When the rotation value satisfies a defined criterion or threshold (e.g., when rotation is close to identity, when compared x, y, z values are close to zero), orientation estimator 362 may determine that the current orientation is sufficiently close to the reference orientation, and pose estimator 314 at that point may initiate translation estimation by translation estimator 364.

Translation estimator 364 may then initiate two-dimensional translation estimation. Translation estimator 364 may extract feature points from the reference/template images of the reference frame and the current images from the current frame. In some cases, the feature points of a frame may comprise a two-dimensional vector, and translation estimator 364 may add a one at the end, for the third dimension, to turn this into a three-dimensional vector. Translation estimator 364 may then estimate a homography transform H such that Feature_template (reference frame) = H * Feature_curr_frame (current frame). Feature_template (reference frame) may comprise feature points for images of the reference frame, and Feature_curr_frame (current frame) may comprise feature points for images of the current frame. Homography transform H may comprise a 3x3 matrix that may be used for two-dimensional translation estimation.

As described previously, bounding box constructor 368 of pose guidance module 316 may be configured to output reference box corners (e.g., reference box corners 132A-132D in FIG. 1) associated with a reference pose and/or frame, and a bounding box (e.g., bounding box 130) associated with a current pose and/or frame, thereby providing visual indications to the user as to how to manipulate the camera devices from the current pose into the desired reference pose. The bounding box of the locked viewport (e.g., box 130), as projected onto the current frame, can be calculated (e.g., by translation estimator 364 and/or bounding box constructor 368) as B = H * Reference_box, where Reference_box is a predefined centered rectangle area (e.g., area associated with reference box corners 132A-132D).

In certain non-limiting examples, translation estimator 364 may also obtain another rotation-only homography transform as H_rot=K(curr)*M(curr)*(K(lock)*M(lock))^-1, where the translation vectors are set to (0, 0, 0). The top left 3x3 submatrices are used so they are invertible. As described previously, K(i) is the camera intrinsic matrix for a given frame, such that K(curr) is the camera intrinsic matrix for the current frame, and K(lock) is the camera intrinsic matrix for the locked/reference frame. M(i) is the camera extrinsic matrix for a given frame, such that M(curr) is the camera extrinsic matrix for the current frame, and M(lock) is the camera extrinsic matrix for the locked/reference frame. In these examples, a rotation-only bounding box without any three-dimensional translation can be obtained as B_rot = H_rot * Reference_box, where Reference_box is a predefined centered rectangle area (e.g., area associated with reference box corners 132A-132D). Translation estimator 364 may approximate the three-dimensional translation by, therefore, first estimating the two-dimensional translation as outlined above, and then scaling from B and B_rot. In some cases, translation estimator 364 may estimate, based on the image feature-based homography transform H and at least one of the current orientation or the reference orientation of camera devices 104 (e.g., which may be based or scaled from B and B_rot), a three-dimensional translation of the current pose relative to the reference pose (e.g., the adjustment for the translation component to transform the current pose to the reference pose).

In certain cases, bounding box constructor 368 may not output a rotation-only bounding box for display at the display device (e.g., display device 102). However, in these examples, instruction module 370 may utilize B and/or B_rot (or corresponding three-dimensional translation estimation from B and B_rot provided by translation estimator 364) in outputting various other forms of visual, haptic, and/or audio instructions to the user (e.g., rotation clockwise or counterclockwise, move closer or farther, etc.).

By thus first estimating the rotation between the current and reference camera poses using orientation estimator 362, and then estimating the translation between the current and reference camera poses using translation estimator 364 after the rotation is sufficiently matched to create the projection matrix, pose estimator 314 and pose guidance module 316 (e.g., using bounding box constructor 368) can obtain a pose difference. Bounding box constructor 368 may output projected reference box corners (e.g., reference box corners 132A-132D) at the current frame, which, in some cases, may be centered or substantially centered within the display. The bounding box (e.g., bounding box 130) output by bounding box constructor may be rotated and/or translated and/or skewed (e.g., with warped corners in certain cases) relative to the reference box corners as displayed.

In some cases, when pose estimator 314 determines that the pose difference between the current pose and the desired, reference pose is large (e.g., above a defined different threshold), instruction module 370 may first provide visual (e.g., text), audio, and/or haptic instructions to the user, which may instruct the user to manipulate mobile computing device 100 or camera devices 104 in certain manners (e.g., to move closer or farther away from the objects in the scene, to rotate clockwise or counterclockwise), in order for pose estimator 314 to identify a closer match between the current pose and the reference pose.

In certain cases, bounding box constructor 368 may only output a bounding box relative to reference box corners (e.g., bounding box 130 relative to bounding box corners 132A-132D) after orientation estimator 362 has first detected a substantial match in orientation between the current pose and the desired reference pose, as described above. Prior to detecting a match, instruction module 370 may provide other forms of visual, audio, and/or haptic instructions to the user, as outlined above. In some cases, to avoid possible user confusion, instructions associated with the largest pose difference can be provided (e.g., instructions to rotate the device counterclockwise).

Once orientation estimator 362 identifies that the orientation of the current pose matches (e.g., satisfies a defined criterion or is below a defined threshold of) the orientation of the reference pose, translation estimator 364 may begin translation estimation. At this point, bounding box constructor 368 may, in various cases, output bounding box 130 relative to reference box corners 132A-132D, providing a visual indication to the user regarding manipulation of camera devices 104 from the current pose to the reference pose, while translation estimator 364 continues to perform real-time translation estimation.

As described earlier, to enable the user to first capture a reference frame of images associated with a reference pose that may be saved/locked into pose database 318, a user may trigger a scene lock mode on mobile computing device 200 (e.g., by activating a graphical or physical button or providing another form of user input), to cause viewport module 212 and/or image capture module 217 to capture and select the currently displayed frame of outputted images as a reference or template frame. For example, the user may provide this user input or user selection via touch, presence-sensitive, and/or audio input detected by one or more sensors of mobile computing device 200. In some examples, camera application 210 may only allow the user to provide such user input to select or trigger such a scene lock mode when appropriate or under certain conditions. For instance, to avoid potential failure cases when frames are hard to track (e.g. frames having white area without enough salient features), and thus unnecessary use of computational resources, viewport module 212 and/or pose estimator 214 may be configured to evaluate how reliably current frames of images captured by camera devices 204 may be tracked, and only enable user selection of a scene lock mode to capture a reference frame when a determined reliability or confidence score satisfies a defined criterion or threshold. In some cases, this evaluation may be performed efficiently by fast image analysis, such as image corner detection. Therefore, the storing of a reference frame may only be enabled in response to determining that the reliability score satisfies the criterion (for example, is above a threshold or below a threshold, depending on the application).

FIGS. 4, 5A-5B, and 6A-6B are screen diagrams illustrating example outputs of reference images, current images, and/or pose guidance provided by a mobile computing device, such as the mobile computing device illustrated in FIG. 1 and/or FIG. 2, in accordance with one or more aspects of the present disclosure. FIG. 4 is a screen diagram illustrating an example output of various reference images that are output at a display device 402 of a mobile computing device. For purposes of illustration only, display device 402 may be one example of display device 102 included in mobile computing device 100 of FIG. 1.

In the example of FIG. 4, display device 402 outputs four reference images of different trees, namely reference image 440, reference image 441, reference image 442, and reference image 443. These reference images 440-443 may be obtained by one or more camera devices, such as camera devices 104 shown in FIG. 1. For instance, using the example outlined above in the description of FIG. 1, a first user, such as an owner of mobile computing device 100, may wish to take a photo of a particular scene or environment that includes multiple different trees on a sunny day in the park. This first user may capture a reference or locked frame of reference images 440-443 based on the first user's desired scene within the park. The first user may, in some cases, trigger a scene lock mode on mobile computing device 100 (e.g., by activating a button or providing another form of user input) to capture and select reference frame 436 of reference images 440-443 as the currently displayed frame at display device 402. For example, the first user may provide user input via touch, presence-sensitive, and/or audio input detected by one or more sensors of mobile computing device 100.

Pose estimator 114 may determine, based on the reference images 440-443 included in reference frame 436, a reference pose of camera devices 104. This reference pose is associated with reference images 440-443, and may also be associated with a current orientation of camera devices 104 (e.g., as detected by one or more sensors of mobile computing device 100, such as a gyroscope). Camera application 110 may save or memorize reference frame 436 (e.g., template frame) of reference images 440-443, as well as any other information associated with the reference pose, within pose database 118. For example, pose estimator 114 may determine a reference orientation of camera devices 104 and/or feature information associated with the captured reference images 440-443, and store this orientation and/or feature information as part of the reference pose within pose database 118. This reference pose may be associated with a desired orientation of mobile computing device 100 and/or camera devices 104 when displaying a particular group of the trees within the given scene on display device 402 illustrated in FIG. 4.

After determining the reference pose, viewport module 112 may output, for display at display device 402, a current frame of one or more current images of the scene. These current images are also obtained by camera devices 104. For example, after the first user (e.g., owner) of mobile computing device 100 has locked template or reference frame 436 associated with the reference pose, the first user may wish for another, second user to take mobile computing device 100 and use camera devices 104 to take a photo of the first user within the scene, such that mobile computing device 100 has the same pose with respect to the scene (and trees within the scene) as the previously captured reference pose. While the other, second user manipulates mobile computing device 100, viewport module 112 may continuously display the current frame of captured images for viewing by this user.

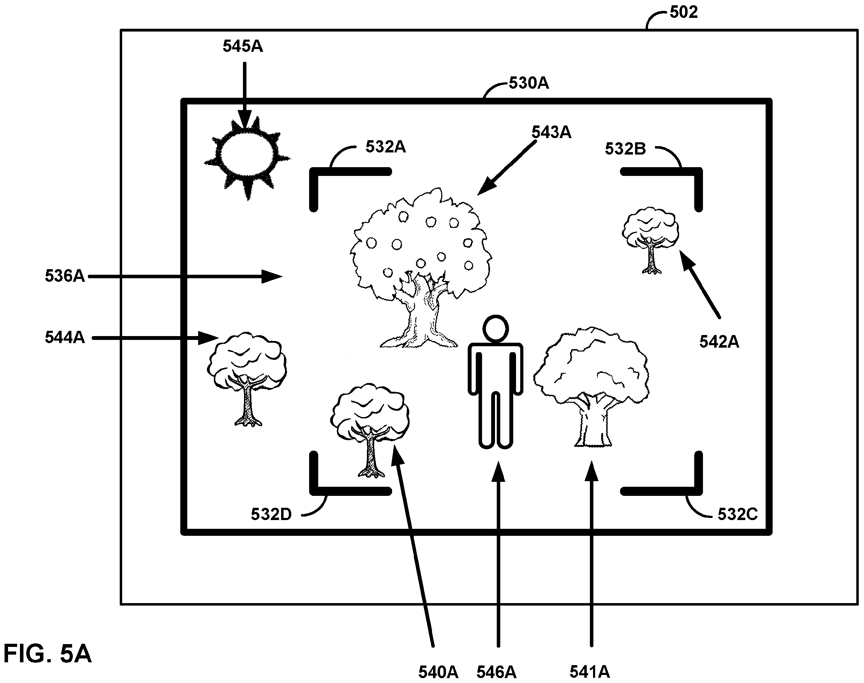

FIG. 5A is a screen diagram illustrating an example output of various current images that may output at a display device 502 of a mobile computing device, such as mobile computing device 100. Display device 402 may be one example of display device 102. As shown in FIG. 5A, current frame 536A includes a current image 540A of the first tree, a current image 541A of the second tree, a current image 542A of the third tree, and a current image 543A of a fourth tree. Current frame 536A also includes a current image 546A of the first user, a current image 544A of a separate (fifth) tree, and a current image 545A of the sun.

Pose estimator 114 may determine, based on all of these currently displayed images included in current frame 536A, a current pose of camera devices 104 as viewport module 112 outputs these current images for display at display device 502. The current pose is associated with these current images, and may further be associated with the currently determined orientation of camera devices 104. Pose estimator 114 may be configured to continuously determine whether or not the detected current pose is the same or different from the reference pose stored in pose database 118. Responsive to determining that the current pose is different from the reference pose, pose guidance module 116 may output an indication of one or more user instructions to manipulate camera devices 104 from the current pose into the reference pose. As a result, the second user may receive and follow these user instructions to manipulate mobile computing device 100 and camera devices 104 to take a photo of the first user within the scene, such that camera devices 104 have the same pose with respect to the scene (and trees within the scene) as the previously captured reference pose.

The user instructions provided by pose guidance module 116 may comprise visual, audio, and/or haptic output that provide one or more indications of the user instructions to manipulate camera devices 104 into the reference pose. In the particular example of FIG. 5A, pose guidance module 116 may provide visual guidance to the second user while attempting to manipulate camera devices 104 into the reference pose. While the second user attempts to manipulate camera devices 104 from a current pose into the desired reference pose, pose guidance module 116 may generate reference box corners 532A-532D (collectively, "reference box corners 532") that are output onto the currently displayed frame 536A at display device 502. As shown in FIG. 5A, reference box corners 132 are associated with the reference frame 436 shown in FIG. 4, and provide visual indications of the reference pose that corresponds to reference frame 436 having the reference images 440-443 of the four particular trees of the scene. However, current frame 536A includes current image 540A of the first tree, current image 541A of the second tree, current image 542A of the third tree, and current image 543A of a fourth tree, in addition to current image 546A of the first user, current image 544A of a separate (fifth) tree, and current image 145A of the sun.

Pose guidance module 116 may also output a current bounding box 530A, which is associated with current frame 536A and visually indicates the boundaries of current frame 536A, and the various current images of frame 536A, as output for display at display device 502 based on the current pose of camera devices 104. However, in the example of FIG. 5A, current bounding box 530A is larger than the reference box or reference area indicated by reference box corners 532, indicating that the current pose is not matched with the reference pose. In particular, the reference frame corresponding to the reference pose may not include image 544A of the fifth tree at the left side of the scene, and may also not include image 545A of the sun. As a result, reference box corners 532 demarcate a reference area that is smaller than bounding box 130. This reference area does not enclose image 544A of the fifth tree or image 545A of the sun, and therefore reference box corners provide a visual indication to the second user that these images are not part of the desired pose.

Instead, reference box corners 532 and bounding box 530A provide a visual indication that the second user is to manipulate camera devices 104 from the current pose into the reference pose by moving camera devices 104 closer to the tree objects represented by current images 540A, 541A, 542A, 543A, and 546A until display device 502 only displays these images, but does not display images 544A and 545A. As the second user manipulates camera devices 104 in this fashion, pose guidance module 116 may continuously reorient the display of bounding box 530A, onto the newly and currently displayed frame, in reference to the visual boundaries of reference box corners 532.

As the current pose more closely aligns with the reference pose, an updated bounding box will become more visually aligned with the reference area associated with and/or demarcated by reference box corners 532. Once the updated bounding box is substantially aligned with this reference area of reference box corners 532, the current pose will be substantially aligned with the reference pose. This alignment is illustrated in FIG. 5B.

Frame 536A includes current image 546A of the first user, which is not included in the reference frame 436. Nevertheless, given the substantial similarity of the other, remaining images 540A, 541A, 542A, and 543A of frame 536A to the images 440, 441, 442, and 442 of frame 436, pose estimator 114 is enabled to determine a substantial match, such as within a threshold degree of similarity, between the current pose of camera devices 104, as associated with displayed frame 536A, with the reference pose of camera devices 104, as associated with frame 436. Pose estimator 114 may be configured to determine this match based on a first determination of a match between a current orientation of camera devices 104 associated with displayed frame 536A with a reference orientation of camera devices 104 associated with frame 436 (e.g., using orientation estimator 362 illustrated in FIG. 3), followed by pose estimator 114 determining (e.g., using translation estimator 364), based on an estimated translation between the current pose relative to the reference pose, a match between the current and reference poses.

FIG. 5B is a screen diagram illustrating an example output of various current images that may output at display device 502, where the current pose is substantially aligned with the reference pose. In FIG. 5B, an updated bounding box 530B has become aligned with the reference area associated with and/or demarcated by reference box corners 532 shown in FIG. 5A. In response to determining a match between the current pose and the reference pose, pose guidance module 116 may output an indication of the match. For example, as illustrated in FIG. 5B, once the current pose is substantially aligned with the reference pose, only updated bounding box 530B is displayed to the second user at display device 502, and reference box corners 532 are no longer shown. The absence of reference box corners 532 at display 502 may provide the second user with a visual indication of the match. In other examples, pose guidance module 116 may provide one or more other indications of a match. For example, pose guidance module 116 may cause bounding box 530B to blink, change color, or otherwise graphically indicate the match. In some cases, pose guidance module 116 may provide textual, audio, and/or haptic feedback to indicate the match to the second user.

The current displayed frame 536B shown in FIG. 5B includes an updated current image 540B of the first tree, an updated current image 541B of the second tree, an updated current image 542B of the third tree, an updated current image 543B of the fourth tree, and an updated current image 546B of the first user. Notably, frame 536B does not include any images of the separate (fifth) tree, or an image of the sun. In this particular example, because the second user may have moved camera devices 104 closer to the desired trees and the first user, the updated images 540B, 541B, 542B, 543B, and 546B within frame 536B may be larger in size than counterpart images 540A, 541A, 542A, 543A, and 546A within frame 536A shown in FIG. 5A.

Through visual indications provided by pose guidance module 116, the second user may know when camera devices 104 have been manipulated into the reference pose, and the second user may use camera devices 104 to take a photograph of current images 540B, 541B, 542B, 543B, and 546B. These current images of the photograph may be captured by image capture module 117 and stored in image database 119. In the case where the first user (e.g., owner) wishes to be included in the photograph, the first user may situate himself or herself within a desired area of the scene (e.g., in between the four trees, as shown in FIG. 5B), and the second user may then take the photograph when pose guidance module 116 indicates that the current pose matches the desired reference pose.

FIGS. 6A-6B are screen diagrams illustrating another example of reference images, current images, and/or pose guidance provided by a mobile computing device, such as the mobile computing device illustrated in FIG. 1 and/or FIG. 2, in accordance with one or more aspects of the present disclosure. For purposes of illustration only, display device 602 shown in FIGS. 6A-6B may be one example of display device 102 shown in FIG. 1.

As noted earlier, in various examples, techniques of the present disclosure may also enable, e.g., professional users to perform surveillance or landscape monitoring and assess the change of a given environment or scene, including any changes to natural or man-made features that may change over time (e.g., landscape change or deterioration, building or construction modifications or alterations over time). In some examples, certain types of mobile computing devices (e.g., drones or satellites) may utilize one or more camera devices to obtain images of certain areas or landscapes over time. This image-based monitoring may be provided in a more effective and efficient manner using the techniques described herein.

In the examples illustrated in FIGS. 6A-6B, techniques of the present disclosure may enable a user to monitor a particular area of a park having multiple trees, and potentially assess any incremental changes to this area over time. As described previously in reference to FIG. 4, a user may first capture a reference frame that includes reference images of the trees in this area, for example, to monitor landscape changes or tree health using subsequent image analysis. FIG. 4 illustrates reference frame 436 that includes images 440-443 of four trees in this park. The user may capture and select this reference frame using camera devices 104, and the information for the reference pose associated with this reference frame may be stored in pose database 118, such as described previously.

Similar to the techniques illustrated in FIGS. 5A-5B, at a later point in time, after reference frame 436 has been captured (e.g., one month later), pose guidance module 116 may output a bounding box 630A that corresponds to a current pose of camera devices 104, and reference box corners 632A-632D (collectively, "reference box corners 632") that correspond to the reference pose, as illustrated in FIG. 6A. For example, the user may wish to monitor this particular area over time, and may use camera devices 104 to take a new photograph of the area one month after the reference pose of FIG. 4 has been captured.

As shown in FIG. 6A, current frame 636A includes a current image 640A of the first tree, a current image 641A of the second tree, and a current image 643A of the fourth tree. Current frame 636A also includes a current image 644A of a separate (fifth) tree, and a current image 650A of the clouds/rain. Frame 636A does not include any images of the third tree that corresponds to reference image 542A.

Responsive to determining that the current pose is different from the reference pose, pose guidance module 116 may output an indication of one or more user instructions to manipulate camera devices 104 from the current pose into the reference pose, such that camera devices 104 have the same pose with respect to the scene (and trees within the scene) as the previously captured reference pose. While the user attempts to manipulate camera devices 104 from a current pose into the desired reference pose, pose guidance module 116 may generate reference box corners 632 that are output onto the currently displayed frame 636A at display device 602.

Pose guidance module 116 may output current bounding box 630A, which is associated with current frame 636A and visually indicates the boundaries of current frame 636A based on the current pose of camera devices 104. However, in the example of FIG. 6A, current bounding box 630A is larger than the reference box or reference area indicated by reference box corners 632, indicating that the current pose is not matched with the reference pose. In particular, the reference frame corresponding to the reference pose may not include image 644A of the fifth tree at the left side of the scene, and may also not include image 650A of the clouds/rain. As a result, reference box corners 632 demarcate a reference area that is smaller than bounding box 630A. This reference area does not enclose image 644A of the fifth tree or image 650A of the clouds/rain, and therefore reference box corners provide a visual indication to the user that these images are not part of the desired pose.

Instead, reference box corners 632 and bounding box 630A provide a visual indication that the user is to manipulate camera devices 104 from the current pose into the reference pose by moving camera devices 104 closer to the tree objects represented by current images 640A, 641A, and 643A until display device 602 only displays these images, but does not display images 644A and 650A. As the user manipulates camera devices 104 in this fashion, pose guidance module 116 may continuously reorient the display of bounding box 630A, onto the newly and currently displayed frame, in reference to the visual boundaries of reference box corners 632. As the current pose more closely aligns with the reference pose, an updated bounding box will become more visually aligned with the reference area associated with and/or demarcated by reference box corners 632.

FIG. 6B is a screen diagram illustrating an example output of various current images that may output at display device 602, where the current pose is substantially aligned with the reference pose. In FIG. 6B, an updated bounding box 630B has become aligned with the reference area associated with and/or demarcated by reference box corners 632 shown in FIG. 6A. In response to determining a match between the current pose and the reference pose, pose guidance module 116 may output an indication of the match. For example, as illustrated in FIG. 6B, once the current pose is substantially aligned with the reference pose, only updated bounding box 630B is displayed to the second user at display device 602, and reference box corners 632 are no longer shown. The absence of reference box corners 632 at display 602 may provide the second user with a visual indication of the match. In other examples, pose guidance module 116 may provide one or more other indications of a match, such as described earlier in reference to FIG. 5B.

The current displayed frame 636B shown in FIG. 6B includes an updated current image 640B of the first tree, an updated current image 641B of the second tree, and an updated current image 643B of the fourth tree. Notably, frame 636B does not include any images of the separate (fifth) tree, or an image of the clouds/rain. In this particular example, because the user may have moved camera devices 104 closer to the desired trees of the reference pose, the updated images 640B, 641B, and 643B within frame 636B may be larger in size than counterpart images 640A, 641A, and 643A within frame 636A shown in FIG. 6A.

Through visual indications provided by pose guidance module 116, the user may know when camera devices 104 have been manipulated into the reference pose, and the user may use camera devices 104 to take a photograph of the current images in frame 636B. In the examples illustrated in FIGS. 6A-6B, techniques of the present disclosure may enable a user to monitor a particular area of a park having multiple trees, and potentially assess any incremental changes to this area over time. For example, over the course of time (e.g., one month), the third tree corresponding to reference image 442 (FIG. 4) may have fallen down or been destroyed. Frames 636A and 636B do not include any images of this third tree. Nevertheless, given the substantial similarity of the other images 640B, 641B, and 643B of frame 636B to the images 440, 441, and 443 of frame 436, pose estimator 114 is enabled to determine a substantial match, such as within a threshold degree of similarity, between the current pose of camera devices 104, as associated with displayed frame 636B, with the reference pose of camera devices 104, as associated with frame 436. Pose estimator 114 may be configured to determine this match based on a first determination of a match between a current orientation of camera devices 104 associated with displayed frame 636B with a reference orientation of camera devices 104 associated with displayed frame 436 (e.g., using orientation estimator 362 illustrated in FIG. 3), followed by pose estimator 114 determining (e.g., using translation estimator 364), based on an estimated translation between the current pose relative to the reference pose, a match between the current and reference poses. In certain cases, more efficient and effective environmental monitoring may therefore be provided.

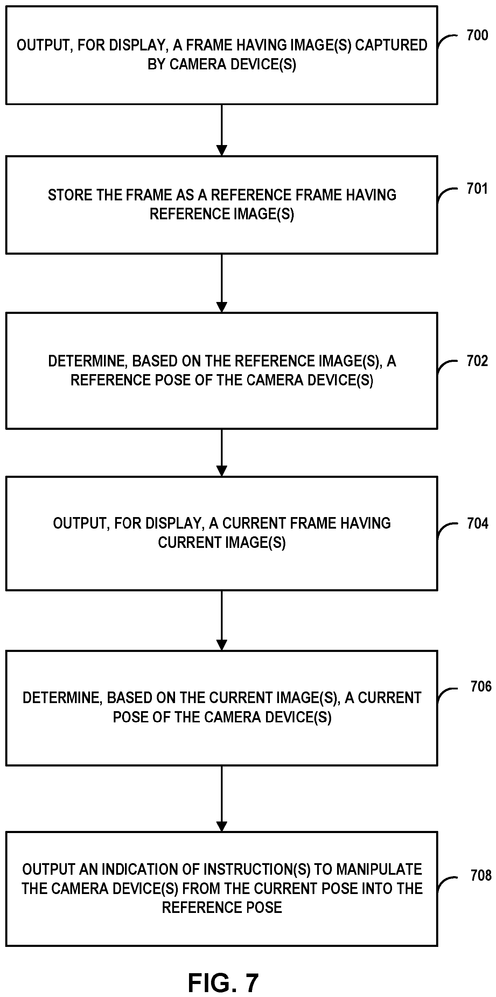

FIG. 7 is a flowchart illustrating example operations of at least one processor (e.g., one or more processors 220) of a computing device, such as mobile computing device 100 and/or 200, in accordance with one or more aspects of the present disclosure. For purposes of illustration only, the operations of FIG. 7 are described with reference to computing device 100 shown in FIG. 1.

Mobile computing device 100 (e.g., using viewport module 112 of camera application 110) outputs (700), for display at a display device (e.g., display device 102), a frame having one or more images that are captured by at least one camera device (e.g., camera devices 104). In response receiving an input (e.g., a user input) to select the frame, image capture module 117 stores (701) the frame as a reference frame having one or more reference images, where the one or more reference images include the one or more images of the frame output at the display device.

Mobile computing device 100 (e.g., using pose estimator 114) determines (702), based on the one or more reference images included in the reference frame, a reference pose of mobile computing device 100, where the reference pose is associated with the one or more reference images. After determining the reference pose, mobile computing device 100 (e.g., using viewport module 112) outputs (704), for display at the display device, a current frame having one or more current images that are obtained by the at least one camera device.

Mobile computing device 100 (e.g., using pose estimator 114) determines (706), based on the one or more current images included in the current frame, a current pose of mobile computing device 100, where the current pose is associated with the one or more current images. Responsive to determining that the current pose is different from the reference pose, mobile computing device 100 (e.g., using viewport module 112 and/or pose guidance module 116) outputs (708) an indication of one or more instructions to manipulate mobile computing device 100 from the current pose into the reference pose.

The following examples are provided for purposes of illustration only.

Example 1: A method comprising: outputting, by a mobile computing device (e.g., by at least one processor of the mobile computing device, which may perform each of the example operations below), and for display at a display device, a frame having one or more images that are captured by at least one camera device; responsive to receiving an input to select the frame, storing, by the mobile computing device, the frame as a reference frame having one or more reference images, wherein the one or more reference images include the one or more images of the frame output at the display device; determining, by the mobile computing device and based on the one or more reference images included in the reference frame, a reference pose of the at least one camera device; after determining the reference pose of the at least one camera device, outputting, by the mobile computing device and for display at the display device, a current frame having one or more current images that are captured by the at least one camera device; determining, by the mobile computing device and based on the one or more current images included in the current frame, a current pose of the at least one camera device; and responsive to determining that the current pose is different from the reference pose, outputting, by the mobile computing device, an indication of one or more instructions to manipulate the at least one camera device from the current pose into the reference pose.

Example 2: The method of Example 1, further comprising: monitoring, by the mobile computing device and over time, based on one or more signals provided by at least one sensor, an orientation of the at least one camera device while the at least one camera device captures one or more frames, wherein determining the reference pose of the at least one camera device includes determining, by the mobile computing device and based on the one or more signals, a reference orientation of the at least one camera device, wherein the reference orientation is associated with the reference frame having the one or more reference images, and wherein determining the current pose of the at least one camera device includes determining, by the mobile computing device and based on the one or more signals, a current orientation of the at least one camera device, wherein the current orientation is associated with the current frame having the one or more current images.

Example 3: The method of Example 2, wherein determining that the current pose is different from the reference pose comprises determining, by the mobile computing device, that the current orientation of the at least one camera device is different from the reference orientation of the at least one camera device, and optionally, wherein the one or more instructions comprise one or more visual, audio, or haptic instructions to manipulate the at least one camera device from the current orientation to the reference orientation.

Example 4: The method of Example 2, wherein determining that the current pose is different from the reference pose comprises: determining, by the mobile computing device, that a difference between the current orientation of the at least one camera device and the reference orientation of the at least one camera device satisfies a defined criterion or threshold, optionally, where satisfying the defined criterion or threshold comprises the difference being below, or less than, a predetermined threshold (or the current orientation being within a threshold amount of the reference orientation), determining, by the mobile computing device, an estimated translation of the current pose relative to the reference pose; and determining, by the mobile computing device and based on the estimated translation, that the current pose is different from the reference pose.

Example 5: The method of Example 4, wherein determining the estimated translation of the current pose relative to the reference pose comprises: estimating, by the mobile computing device, a two-dimensional translation of the one or more current images of the current frame relative to the one or more reference images of the reference frame; and optionally, generating, by the mobile computing device using a motion model constructor, based on the current orientation and the two-dimensional translation, a projection matrix that maps the one or more current images of the current frame to the one or more reference images of the reference frame. The indication of the one or more instructions to manipulate the at least one camera device from the current pose into the reference pose can be based on the projection matrix.

Example 6: The method of Example 5, wherein estimating the two-dimensional translation comprises: comparing, by the mobile computing device, the one or more current images of the current frame to the one or more reference images of the reference frame; and estimating, by the mobile computing device and based on the comparing, the two-dimensional translation of the one or more current images of the current frame relative to the one or more reference images of the reference frame.

Example 7: The method of Example 6, wherein comparing the one or more current images of the current frame to the one or more reference images of the reference frame comprises performing, by the mobile computing device, at least one of an image feature-based homography transform or a direct image correlation between the one or more current images and the one or more reference images.

Example 8: The method of Example 7, further comprising: estimating, by the mobile computing device, based on the image feature-based homography transform and at least one of the current orientation or the reference orientation of the at least one camera device, a three-dimensional translation of the current pose relative to the reference pose.

Example 9: The method of any of Examples 1-8, wherein outputting the indication of the one or more instructions comprises outputting, by the mobile computing device and based on a pose difference between the current pose and the reference pose, at least one instruction (e.g., a visual instruction, an audio instruction, and/or a haptic instruction) to rotate or translate the at least one camera device in space, and wherein the method further comprises: responsive to determining a match between the current pose and the reference pose, outputting, by the mobile computing device, an indication of the match.

Example 10: The method of any of Examples 1-9, wherein outputting the indication of the one or more instructions comprises outputting, by mobile computing device, an indication to visually align a bounding box with a plurality of reference box corners in order to manipulate the at least one camera device from the current pose into the reference pose, the plurality of reference box corners indicating a reference area associated with the reference pose, and the bounding box indicating an area associated with the current pose.

Example 11: The method of Example 10, further comprising: determining, by the mobile computing device and based on an estimated translation of the current pose relative to the reference pose, a location of the bounding box relative to the reference box corners, wherein the estimated translation of the current pose relative to the reference pose is based on performing a feature-based homography transform to estimate a two-dimensional translation of the one or more current images of the current frame relative to the one or more reference images of the reference frame.

Example 12: The method of any of Examples 1-11, wherein receiving the input comprises receiving, by the mobile computing device, a user input comprising one or more of a touch input, an audio input, or presence-sensitive input detected at the mobile computing device to select the frame as the reference frame.

Example 13: The method of Example 12, further comprising: evaluating, by the mobile computing device, a reliability score that is associated with the one or more images included in the frame that are captured by the at least one camera device, wherein storing the frame as the reference frame responsive to receiving the input is enabled only in response to determining, by the mobile computing device, that the reliability score satisfies a determined threshold or criterion, optionally, in response to determining that the reliability score is above a predetermined threshold.

Example 14: The method of any of Examples 1-13, wherein the one or more instructions comprise one or more visual, audio, or haptic instructions to manipulate the at least one camera device from the current pose into the reference pose.

Example 15: A mobile computing device, comprising: at least one processor; and a display device communicatively coupled to the at least one processor, wherein the at least one processor is configured to: output, for display at a display device, a frame having one or more images that are captured by at least one camera device; responsive to receiving an input to select the frame, store the frame as a reference frame having one or more reference images, wherein the one or more reference images include the one or more images of the frame output at the display device; determine, based on the one or more reference images included in the reference frame, a reference pose of the at least one camera device; after determining the reference pose of the at least one camera device, output, for display at the display device, a current frame having one or more current images that are captured by the at least one camera device, wherein the current frame includes at least one image that is not included in the reference frame; determine, based on the one or more current images included in the current frame, a current pose of the at least one camera device; and responsive to determining that the current pose is different from the reference pose, output an indication of one or more instructions to manipulate the at least one camera device from the current pose into the reference pose.

Example 16: A mobile computing device, comprising: at least one processor; and a display device communicatively coupled to the at least one processor, wherein the at least one processor is configured to perform the method of any of Examples 1-14. Optionally, the mobile computing device comprises a camera device communicatively coupled to the at least one processor. Optionally, a system may be provided comprising the mobile computing device and a camera device coupled to the at least one processor, where the camera device is remote from the mobile computing device.

Example 17: A computer-readable storage medium encoded with instructions that, when executed, cause at least one processor of a mobile computing device to perform operations comprising: outputting, for display at a display device, a frame having one or more images that are captured by at least one camera device; responsive to receiving an input to select the frame, storing the frame as a reference frame having one or more reference images, wherein the one or more reference images include the one or more images of the frame output at the display device; determining, based on the one or more reference images included in the reference frame, a reference pose of the at least one camera device; after determining the reference pose of the at least one camera device, outputting, for display at the display device, a current frame having one or more current images that are captured by the at least one camera device, wherein the current frame includes at least one image that is not included in the reference frame; determining, based on the one or more current images included in the current frame, a current pose of the at least one camera device; and responsive to determining that the current pose is different from the reference pose, outputting an indication of one or more instructions to manipulate the at least one camera device from the current pose into the reference pose.

Example 18: A computer-readable storage medium encoded with instructions that, when executed, cause at least one processor of a mobile computing device to perform the method of Examples 1-14.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSP's), general purpose microprocessors, application specific integrated circuits (ASIC's), field programmable logic arrays (FPGA's), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of IC's (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperable hardware units, including one or more processors as described above, in conjunction with suitable software and/or firmware.

It is to be recognized that, depending on the embodiment, certain acts or events of any of the methods described herein can be performed in a different sequence, may be added, merged, or left out altogether (e.g., not all described acts or events are necessary for the practice of the method). Moreover, in certain embodiments, acts or events may be performed concurrently, e.g., through multi-threaded processing, interrupt processing, or multiple processors, rather than sequentially.

In some examples, a computer-readable storage medium comprises a non-transitory medium. The term "non-transitory" indicates that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A method comprising:
outputting (700), by at least one processor of a mobile computing device (100), and for display at a display device (102), a frame having one or more images representing objects that are captured by at least one camera device (104);
responsive to receiving an input to select the frame, storing (701), by the at least one processor, the frame as a reference frame having one or more reference images, wherein the one or more reference images include the one or more images of the frame output at the display device;
determining (702), by the at least one processor and based on the one or more reference images included in the reference frame, a reference pose of the at least one camera device, the reference pose including a reference orientation;
after determining the reference pose of the at least one camera device, outputting (704), by the at least one processor and for display at the display device, a current frame having one or more current images that are captured by the at least one camera device;
determining (706), by the at least one processor and based on the one or more current images included in the current frame, a current pose of the at least one camera device, the current pose including a current orientation;
determining, by the at least one processor, that a difference between the current orientation of the at least one camera device and the reference orientation of the at least one camera device satisfies a defined criterion;
responsive to determining that the difference satisfies the defined criterion, determining, by the at least one processor, an estimated translation of the current pose relative to the reference pose;
determining, by the at least one processor and based on the estimated translation, that the current pose is different from the reference pose; and
responsive to determining that the current pose is different from the reference pose, outputting (708), by the at least one processor, an indication of one or more instructions to manipulate the at least one camera device from the current pose into the reference pose.

2. The method of claim 1, further comprising:
monitoring, by the at least one processor and over time, based on one or more signals provided by at least one sensor, an orientation of the at least one camera device while the at least one camera device captures one or more frames,
wherein determining the reference pose of the at least one camera device includes determining, by the at least one processor and based on the one or more signals, the reference orientation of the at least one camera device, wherein the reference orientation is associated with the reference frame having the one or more reference images, and
wherein determining the current pose of the at least one camera device includes determining, by the at least one processor and based on the one or more signals, the current orientation of the at least one camera device, wherein the current orientation is associated with the current frame having the one or more current images.

3. The method of claim 1 or claim 2, wherein determining the estimated translation of the current pose relative to the reference pose comprises:
estimating, by the at least one processor, a two-dimensional translation of the one or more current images of the current frame relative to the one or more reference images of the reference frame; and
generating, by the at least one processor using a motion model constructor, based on the current orientation and the two-dimensional translation, a projection matrix that maps the one or more current images of the current frame to the one or more reference images of the reference frame, wherein the indication of one or more instructions is based on the projection matrix.

4. The method of claim 3, wherein estimating the two-dimensional translation comprises:
comparing, by the at least one processor, the one or more current images of the current frame to the one or more reference images of the reference frame; and
estimating, by the at least one processor and based on the comparing, the two-dimensional translation of the one or more current images of the current frame relative to the one or more reference images of the reference frame.

5. The method of claim 4, wherein comparing the one or more current images of the current frame to the one or more reference images of the reference frame comprises performing, by the at least one processor, at least one of an image feature-based homography transform or a direct image correlation between the one or more current images and the one or more reference images.

6. The method of claim 5, further comprising:
estimating, by the at least one processor, based on the image feature-based homography transform and at least one of the current orientation or the reference orientation of the at least one camera device, a three-dimensional translation of the current pose relative to the reference pose.

7. The method of any of claims 1-6,
wherein outputting the indication of the one or more instructions comprises outputting, by the at least one processor and based on a pose difference between the current pose and the reference pose, at least one instruction to rotate or translate the at least one camera device in space, and
wherein the method further comprises:
responsive to determining a match between the current pose and the reference pose, outputting, by the at least one processor, an indication of the match.

8. The method of any of claims 1-7,
wherein outputting the indication of the one or more instructions comprises outputting, by at least one processor, an indication to visually align a bounding box with a plurality of reference box corners in order to manipulate the at least one camera device from the current pose into the reference pose, the plurality of reference box corners indicating a reference area associated with the reference pose, and the bounding box indicating an area associated with the current pose.

9. The method of claim 8, further comprising:
determining, by the at least one processor and based on an estimated translation of the current pose relative to the reference pose, a location of the bounding box relative to the reference box corners,
wherein the estimated translation of the current pose relative to the reference pose is based on performing a feature-based homography transform to estimate a two-dimensional translation of the one or more current images of the current frame relative to the one or more reference images of the reference frame.

10. The method of any of claims 1-9, wherein receiving the input comprises receiving, by the at least one processor, a user input comprising one or more of a touch input, an audio input, or a presence-sensitive input detected at the mobile computing device to select the frame as the reference frame.

11. The method of claim 10, further comprising:
evaluating, by the at least one processor, a reliability score that is associated with the one or more images included in the frame that are captured by the at least one camera device,
wherein storing the frame as the reference frame responsive to receiving the input is enabled only in response to determining, by the at least one processor, that the reliability score satisfies a determined criterion.

12. The method of any of claims 1-11, wherein the one or more instructions comprise one or more visual, audio, or haptic instructions to manipulate the at least one camera device from the current pose into the reference pose.

13. A mobile computing device (100), comprising:
at least one processor;
a display device (102) communicatively coupled to the at least one processor,
wherein the at least one processor is configured to perform the method of any of claims 1-12.

14. A computer-readable storage medium encoded with instructions that, when executed, cause at least one processor of a mobile computing device to perform the method of any of claims 1-12.

## Patentansprüche

1. Verfahren, umfassend:
Ausgeben (700) eines Rahmens, der ein oder mehrere Bilder aufweist, die Gegenstände darstellen, die von mindestens einer Kameravorrichtung (104) aufgenommen werden, durch mindestens einen Prozessor einer mobilen Rechenvorrichtung (100) und zum Anzeigen an einer Anzeigevorrichtung (102);
als Reaktion auf Empfangen einer Eingabe zum Auswählen des Rahmens, Speichern (701) des Rahmens als Referenzrahmen, der ein oder mehrere Referenzbilder aufweist, durch den mindestens einen Prozessor, wobei das eine oder die mehreren Referenzbilder das eine oder die mehreren Bilder der Rahmenausgabe an der Anzeigevorrichtung beinhalten;
Bestimmen (702) einer Referenzpose der mindestens einen Kameravorrichtung durch den mindestens einen Prozessor und basierend auf dem einen oder den mehreren Referenzbildern, die in dem Referenzrahmen beinhaltet sind, wobei die Referenzpose eine Referenzausrichtung beinhaltet;
nach dem Bestimmen der Referenzpose der mindestens einen Kameravorrichtung, Ausgeben (704) eines aktuellen Rahmens, der ein oder mehrere aktuelle Bilder aufweist, die von der mindestens einen Kameravorrichtung aufgenommen werden, durch den mindestens einen Prozessor und zum Anzeigen an der Anzeigevorrichtung;
Bestimmen (706) einer aktuellen Pose der mindestens einen Kameravorrichtung durch den mindestens einen Prozessor und basierend auf dem einen oder den mehreren aktuellen Bildern, die in dem aktuellen Rahmen beinhaltet sind, wobei die aktuelle Pose eine aktuelle Ausrichtung beinhaltet;
Bestimmen, dass ein Unterschied zwischen der aktuellen Ausrichtung der mindestens einen Kameravorrichtung und der Referenzausrichtung der mindestens einen Kameravorrichtung ein definiertes Kriterium erfüllt, durch den mindestens einen Prozessor;
als Reaktion auf das Bestimmen, dass der Unterschied das definierte Kriterium erfüllt, Bestimmen einer geschätzten Verschiebung der aktuellen Pose relativ zu der Referenzpose durch den mindestens einen Prozessor;
Bestimmen, dass sich die aktuelle Pose von der Referenzpose unterscheidet, durch den mindestens einen Prozessor und basierend auf der geschätzten Verschiebung; und
als Reaktion auf das Bestimmen, dass sich die aktuelle Pose von der Referenzpose unterscheidet, Ausgeben (708) einer Angabe von einer oder mehreren Anweisungen, um die mindestens eine Kameravorrichtung von der aktuellen Pose in die Referenzpose zu manipulieren, durch den mindestens einen Prozessor.

2. Verfahren nach Anspruch 1, ferner umfassend:
Überwachen einer Ausrichtung der mindestens einen Kameravorrichtung während die mindestens eine Kameravorrichtung einen oder mehrere Rahmen aufnimmt, durch den mindestens einen Prozessor und über die Zeit, basierend auf einem oder mehreren Signalen, die von mindestens einem Sensor bereitgestellt werden,
wobei das Bestimmen der Referenzpose der mindestens einen Kameravorrichtung das Bestimmen der Referenzausrichtung der mindestens einen Kameravorrichtung durch den mindestens einen Prozessor und basierend auf dem einen oder mehreren Signalen beinhaltet, wobei die Referenzausrichtung dem Referenzrahmen zugeordnet ist, der das eine oder die mehreren Referenzbilder aufweist, und
wobei das Bestimmen der aktuellen Pose der mindestens einen Kameravorrichtung das Bestimmen der aktuellen Ausrichtung der mindestens einen Kameravorrichtung durch den mindestens einen Prozessor und basierend auf dem einen oder mehreren Signalen beinhaltet, wobei die aktuelle Ausrichtung dem aktuellen Rahmen zugeordnet ist, der das eine oder die mehreren aktuellen Bilder aufweist.

3. Verfahren nach Anspruch 1 oder Anspruch 2, wobei das Bestimmen der geschätzten Verschiebung der aktuellen Pose relativ zu der Referenzpose Folgendees umfasst:
Schätzen einer zweidimensionalen Verschiebung des einen oder der mehreren aktuellen Bilder des aktuellen Rahmens relativ zu dem einen oder den mehreren Referenzbildern des Referenzrahmens durch den mindestens einen Prozessor; und
Erzeugen einer Projektionsmatrix, die das eine oder die mehreren aktuellen Bilder des aktuellen Rahmens auf das eine oder die mehreren Referenzbilder des Referenzrahmens abbildet, durch den mindestens einen Prozessor unter Verwendung eines Bewegungsmodellkonstruktors basierend auf der aktuellen Ausrichtung und der zweidimensionalen Verschiebung, wobei die Angabe von einer oder mehreren Anweisungen auf der Projektionsmatrix basiert.

4. Verfahren nach Anspruch 3, wobei das Schätzen der zweidimensionalen Verschiebung Folgendes umfasst:
Vergleichen des einen oder der mehreren aktuellen Bilder des aktuellen Rahmens mit dem einen oder den mehreren Referenzbildern des Referenzrahmens durch den mindestens einen Prozessor; und
Schätzen der zweidimensionalen Verschiebung des einen oder der mehreren aktuellen Bilder des aktuellen Rahmens relativ zu dem einen oder den mehreren Referenzbildern des Referenzrahmens durch den mindestens einen Prozessor und basierend auf dem Vergleichen.

5. Verfahren nach Anspruch 4, wobei das Vergleichen des einen oder der mehreren aktuellen Bilder des aktuellen Rahmens mit dem einen oder den mehreren Referenzbildern des Referenzrahmens das Durchführen mindestens einer bildmerkmalbasierten Homographietransformation oder einer direkten Bildkorrelation zwischen dem einen oder den mehreren aktuellen Bildern und dem einen oder den mehreren Referenzbildern durch den mindestens einen Prozessor umfasst.

6. Verfahren nach Anspruch 5, ferner umfassend:
Schätzen einer dreidimensionalen Verschiebung der aktuellen Pose relativ zu der Referenzpose durch den mindestens einen Prozessor basierend auf der bildmerkmalbasierten Homographietransformation und mindestens einer der aktuellen Ausrichtung oder der Referenzausrichtung der mindestens einen Kameravorrichtung.

7. Verfahren nach einem der Ansprüche 1-6,
wobei das Ausgeben der Angabe der einen oder mehreren Anweisungen das Ausgeben mindestens einer Anweisung zum Drehen oder Verschieben der mindestens einen Kameravorrichtung im Raum umfasst, durch den mindestens einen Prozessor und basierend auf einem Posenunterschied zwischen der aktuellen Pose und der Referenzpose, und
wobei das Verfahren ferner Folgendes umfasst:
als Reaktion auf das Bestimmen einer Übereinstimmung zwischen der aktuellen Pose und der Referenzpose, Ausgeben einer Angabe über die Übereinstimmung durch den mindestens einen Prozessor.

8. Verfahren nach einem der Ansprüche 1-7,
wobei das Ausgeben der Angabe der einen oder der mehreren Anweisungen das Ausgeben einer Angabe zum visuellen Ausrichten eines Begrenzungskastens mit einer Vielzahl von Referenzkastenecken umfasst, um die mindestens eine Kameravorrichtung von der aktuellen Pose in die Referenzpose zu manipulieren, durch den mindestens einen Prozessor, wobei die Vielzahl von Referenzkastenecken eine der Referenzpose zugeordnete Referenzfläche angibt und der Begrenzungskasten eine der aktuellen Pose zugeordnete Fläche angibt.

9. Verfahren nach Anspruch 8, ferner umfassend:
Bestimmen eines Standorts des Begrenzungskastens relativ zu den Referenzkastenecken durch den mindestens einen Prozessor und basierend auf einer geschätzten Verschiebung der aktuellen Pose relativ zu der Referenzpose,
wobei die geschätzte Verschiebung der aktuellen Pose relativ zu der Referenzpose auf dem Durchführen einer bildmerkmalbasierten Homographietransformation basiert, um eine zweidimensionale Verschiebung des einen oder der mehreren aktuellen Bilder des aktuellen Rahmens relativ zu dem einen oder den mehreren Referenzbildern des Referenzrahmens zu schätzen.

10. Verfahren nach einem der Ansprüche 1-9, wobei das Empfangen der Eingabe das Empfangen einer Benutzereingabe durch den mindestens einen Prozessor umfasst, die eine oder mehrere von einer Berührungseingabe, einer Audioeingabe oder einer an der mobilen Rechenvorrichtung detektierten präsenzsensitiven Eingabe umfasst, um den Rahmen als Referenzrahmen auszuwählen.

11. Verfahren nach Anspruch 10, ferner umfassend:
Bewerten einer Zuverlässigkeitsbewertung, die dem einen oder den mehreren in dem Rahmen beinhalteten Bildern, die von der mindestens einen Kameravorrichtung aufgenommen wurden, zugeordnet ist, durch den mindestens einen Prozessor,
wobei das Speichern des Rahmens als der Referenzrahmen als Reaktion auf das Empfangen der Eingabe nur als Reaktion auf das Bestimmen, dass die Zuverlässigkeitsbewertung ein bestimmtes Kriterium erfüllt, aktiviert wird, durch den mindestens einen Prozessor.

12. Verfahren nach einem der Ansprüche 1-11, wobei die eine oder die mehreren Anweisungen eine oder mehrere visuelle, akustische oder haptische Anweisungen umfassen, um die mindestens eine Kameravorrichtung aus der aktuellen Pose in die Referenzpose zu manipulieren.

13. Mobile Rechenvorrichtung (100), umfassend:
mindestens einen Prozessor;
eine Anzeigevorrichtung (102), die kommunikativ mit mindestens einem Prozessor gekoppelt ist,
wobei der mindestens eine Prozessor dazu konfiguriert ist, das Verfahren nach Anspruch 1-12 durchzuführen.

14. Computerlesbares Speichermedium, das mit Anweisungen codiert ist, die, wenn sie ausgeführt werden, mindestens einen Prozessor einer mobilen Rechenvorrichtung veranlassen, das Verfahren nach einem der Ansprüche 1-12 durchzuführen.

## Revendications

1. Procédé comprenant :
le fait de délivrer (700), par au moins un processeur d'un dispositif informatique mobile (100), et pour affichage sur un dispositif d'affichage (102), une trame présentant une ou plusieurs images représentant des objets qui sont capturés par au moins un dispositif de caméra (104) ;
en réponse à la réception d'une entrée pour sélectionner la trame, le stockage (701), par l'au moins un processeur, de la trame en tant que trame de référence présentant une ou plusieurs images de référence, dans lequel les une ou plusieurs images de référence comportent les une ou plusieurs images de la trame délivrées sur le dispositif d'affichage ;
la détermination (702), par l'au moins un processeur et sur la base des une ou plusieurs images de référence incluses dans la trame de référence, d'une pose de référence de l'au moins un dispositif de caméra, la pose de référence comportant une orientation de référence ;
après avoir déterminé la pose de référence de l'au moins un dispositif de caméra, le fait de délivrer (704), par l'au moins un processeur et pour affichage sur le dispositif d'affichage, une trame actuelle présentant une ou plusieurs images actuelles qui sont capturées par l'au moins un dispositif de caméra ;
la détermination (706), par l'au moins un processeur et sur la base des une ou plusieurs images actuelles incluses dans la trame actuelle, d'une pose actuelle de l'au moins un dispositif de caméra, la pose actuelle comportant une orientation actuelle ;
la détermination, par l'au moins un processeur, selon laquelle une différence entre l'orientation actuelle de l'au moins un dispositif de caméra et l'orientation de référence de l'au moins un dispositif de caméra satisfait un critère défini ;
en réponse à la détermination selon laquelle la différence satisfait le critère défini, la détermination, par l'au moins un processeur, d'une translation estimée de la pose actuelle par rapport à la pose de référence ;
la détermination, par l'au moins un processeur et sur la base de la translation estimée, selon laquelle la pose actuelle est différente de la pose de référence ; et
en réponse à la détermination selon laquelle la pose actuelle est différente de la pose de référence, le fait de délivrer (708), par l'au moins un processeur, une indication d'une ou de plusieurs instructions pour manipuler l'au moins un dispositif de caméra de la pose actuelle à la pose de référence.

2. Procédé selon la revendication 1, comprenant également :
la surveillance, par l'au moins un processeur et au fil du temps, sur la base d'un ou de plusieurs signaux fournis par au moins un capteur, d'une orientation de l'au moins un dispositif de caméra pendant que l'au moins un dispositif de caméra capture une ou plusieurs trames,
dans lequel la détermination de la pose de référence de l'au moins un dispositif de caméra comporte la détermination, par l'au moins un processeur et sur la base des un ou plusieurs signaux, de l'orientation de référence de l'au moins un dispositif de caméra, dans lequel l'orientation de référence est associée à la trame de référence présentant les une ou plusieurs images de référence, et
dans lequel la détermination de la pose actuelle de l'au moins un dispositif de caméra comporte la détermination, par l'au moins un processeur et sur la base des un ou plusieurs signaux, de l'orientation actuelle de l'au moins un dispositif de caméra, dans lequel l'orientation actuelle est associée à la trame actuelle présentant les une ou plusieurs images actuelles.

3. Procédé selon la revendication 1 ou la revendication 2, dans lequel la détermination de la translation estimée de la pose actuelle par rapport à la pose de référence comprend :
l'estimation, par l'au moins un processeur, d'une translation bidimensionnelle des une ou plusieurs images actuelles de la trame actuelle par rapport aux une ou plusieurs images de référence de la trame de référence ; et
la génération, par l'au moins un processeur à l'aide d'un constructeur de modèle de mouvement, sur la base de l'orientation actuelle et de la translation bidimensionnelle, d'une matrice de projection qui mappe les une ou plusieurs images actuelles de la trame actuelle sur les une ou plusieurs images de référence de la trame de référence, dans lequel l'indication d'une ou de plusieurs instructions est basée sur la matrice de projection.

4. Procédé selon la revendication 3, dans lequel l'estimation de la translation bidimensionnelle comprend :
la comparaison, par l'au moins un processeur, des une ou plusieurs images actuelles de la trame actuelle aux une ou plusieurs images de référence de la trame de référence ; et
l'estimation, par l'au moins un processeur et sur la base de la comparaison, d'une translation bidimensionnelle des une ou plusieurs images actuelles de la trame actuelle par rapport aux une ou plusieurs images de référence de la trame de référence.

5. Procédé selon la revendication 4, dans lequel la comparaison des une ou plusieurs images actuelles de la trame actuelle aux une ou plusieurs images de référence de la trame de référence comprend l'exécution, par l'au moins un processeur, d'au moins l'une d'une transformation d'homographie basée sur des caractéristiques d'image ou d'une corrélation d'image directe entre les une ou plusieurs images actuelles et les une ou plusieurs images de référence.

6. Procédé selon la revendication 5, comprenant également :
l'estimation, par l'au moins un processeur, sur la base de la transformation d'homographie basée sur des caractéristiques d'image et d'au moins l'une de l'orientation actuelle ou de l'orientation de référence de l'au moins un dispositif de caméra, d'une translation tridimensionnelle de la pose actuelle par rapport à la pose de référence.

7. Procédé selon l'une quelconque des revendications 1 à 6,
dans lequel le fait de délivrer l'indication des une ou plusieurs instructions comprend le fait de délivrer, par l'au moins un processeur et sur la base d'une différence de pose entre la pose actuelle et la pose de référence, au moins une instruction pour faire tourner ou provoquer la translation de l'au moins un dispositif de caméra dans l'espace, et
dans lequel le procédé comprend également :
en réponse à la détermination d'une correspondance entre la pose actuelle et la pose de référence, le fait de délivrer, par l'au moins un processeur, une indication de la correspondance.

8. Procédé selon l'une quelconque des revendications 1 à 7, dans lequel le fait de délivrer l'indication des une ou plusieurs instructions comprend le fait de délivrer, par au moins un processeur, une indication pour aligner visuellement un cadre de délimitation avec une pluralité de coins de cadre de référence afin de manipuler l'au moins un dispositif de caméra de la pose actuelle à la pose de référence, la pluralité de coins de cadre de référence indiquant une zone de référence associée à la pose de référence, et le cadre de délimitation indiquant une zone associée à la pose actuelle.

9. Procédé selon la revendication 8, comprenant également :
la détermination, par l'au moins un processeur et sur la base d'une translation estimée de la pose actuelle par rapport à la pose de référence, d'un emplacement du cadre de délimitation par rapport aux coins de cadre de référence,
dans lequel la translation estimée de la pose actuelle par rapport à la pose de référence est basée sur la réalisation d'une transformation d'homographie basée sur des caractéristiques pour estimer une translation bidimensionnelle des une ou plusieurs images actuelles de la trame actuelle par rapport aux une ou plusieurs images de référence de la trame de référence.

10. Procédé selon l'une quelconque des revendications 1 à 9, dans lequel la réception de l'entrée comprend la réception, par l'au moins un processeur, d'une entrée utilisateur comprenant une ou plusieurs d'une entrée tactile, d'une entrée audio ou d'une entrée sensible à la présence détectée au niveau du dispositif informatique mobile pour sélectionner la trame en tant que trame de référence.

11. Procédé selon la revendication 10, comprenant également :
l'évaluation, par l'au moins un processeur, d'un score de fiabilité qui est associé aux une ou plusieurs images incluses dans la trame qui sont capturées par l'au moins un dispositif de caméra,
dans lequel le stockage de la trame en tant que trame de référence en réponse à la réception de l'entrée est activé uniquement en réponse à la détermination, par l'au moins un processeur, selon laquelle le score de fiabilité satisfait un critère déterminé.

12. Procédé selon l'une quelconque des revendications 1 à 11, dans lequel les une ou plusieurs instructions comprennent une ou plusieurs instructions visuelles, audio ou haptiques pour manipuler l'au moins un dispositif de caméra de la pose actuelle à la pose de référence.

13. Dispositif informatique mobile (100), comprenant :
au moins un processeur ;
un dispositif d'affichage (102) couplé de manière communicative à l'au moins un processeur,
dans lequel l'au moins un processeur est configuré pour réaliser le procédé selon l'une quelconque des revendications 1 à 12.

14. Support de stockage lisible par ordinateur codé avec des instructions qui, lorsqu'elles sont exécutées, amènent au moins un processeur d'un dispositif informatique mobile à réaliser le procédé selon l'une quelconque des revendications 1 à 12.
